# EUROPEAN PATENT SPECIFICATION

(11) **EP 2 726 559 B1**
(45) Date of publication and mention of the grant of the patent: **05.04.2017**
(21) Application number: 12805177.8
(22) Date of filing: 29.06.2012
(51) Int. Cl.: C09D 5/16, C09D 183/12

(54) **POLYSILOXANE-BASED FOULING RELEASE COATS INCLUDING ENZYMES**
FÄULNISFREISETZUNGSBESCHICHTUNGEN AUF POLYSILOXANBASIS MIT ENZYMEN
REVÊTEMENTS ANTI-SALISSURES À BASE DE POLYSILOXANE COMPRENANT DES ENZYMES

(30) Priority: 30.06.2011 EP 11172166
(43) Date of publication of application: 07.05.2014
(60) Divisional application: 15155335.1
(73) Proprietor: Hempel A/S, 2800 Kongens Lyngby (DK)
(72) Inventor: OLSEN, Stefan Møller, DK-2100 København Ø (DK); YEBRA, Diego Meseguer, 2100 København Ø (DK)
(74) Representative: Inspicos P/S
(86) International application number: PCT/DK2012/050226
(87) International publication number: WO 2013/000477

(56) References cited:
- WO-A1-95/32862
- WO-A1-2006/002630
- WO-A1-2006/002630
- WO-A1-2008/074102
- WO-A2-01/94487
- US-A- 5 919 689
- US-A- 5 919 689
- US-A1- 2009 221 752
- US-B2- 6 559 201
- KIM YOUNG DUK ET AL: "Siloxane-based biocatalytic films and paints for use as reactive coatings", BIOTECHNOLOGY AND BIOENGINEERING, WILEY & SONS, HOBOKEN, NJ, US, vol. 72, no. 4, 20 February 2001 (2001-02-20), pages 475-482, XP002535934, ISSN: 0006-3592
- DATABASE WPI Week 200682 22 April 2005 (2005-04-22) Thomson Scientific, London, GB; AN 2006-806651 XP002658933, & JP 2006 299132 A (KANSAI PAINT CO LTD) 2 November 2006 (2006-11-02)
- KIM Y.D. ET AL.: 'Siloxane-based biocatalytic films and paints for use as reactive coatings' BIOTECHNOLOGY AND BIOENGINEERING vol. 72, no. 4, 20 February 2001, pages 475 - 482, XP002535934

## Description

### FIELD OF THE INVENTION

The present invention relates to novel polysiloxane-based fouling release coats having included therein enzymes, in particular for suppressing marine bio-fouling. In particular variants, a) the coat further comprises one or more hydrophilic-modified polysiloxanes oils; and/or b) the binder matrix has included as a part thereof hydrophilic oligomer/polymer moieties.

### BACKGROUND OF THE INVENTION

In McDaniel et al.; "Formulating with Bioengineered Additives - Enhancing the Performance and Functionality of Paints and Coatings", Coatings World, 15 March 2010, it is mentioned that "Several different groups have reported on efforts to develop marine anti-fouling paints containing enzymes. One approach involves incorporation of hydrolytic enzymes into low-surface energy polydimethylsiloxane coatings to provide a dual mechanism for reducing attachment of marine organisms."

Kim et al. 2001 "Siloxane-based biocatalytic films and paints for use as reactive coatings. Biotechnology and Bioengineering, Vol. 72, discloses a polysiloxane film containing immobilised proteases. The enzymes are immobilised either by sol-gel entrapment or by covalent linkage to the polydimethylsiloxane matrix. A decreased tendency of protein adsorption on PDMS films are reported when the siloxane films contain the immobilised proteases.

In EP1661955A1 an antifouling coating comprising immobilised enzymes in a siloxane matrix is disclosed. Laboratory barnacle settlement assays indicate that the performance of a silicone-based antifouling coating is improved when enzymes are immobilised in it.

WO 01/072911 discloses a method for releasing antimicrobial compounds by incorporating enzymes into antifouling coatings. The method depends on the simultaneous incorporation of an enzyme and its substrate into an antifouling coating.

In US 5,770,188 an antifouling paint composition is disclosed. The composition contains a resin, which can be selected from a list containing silicone, and an enzyme that has been modified by coating its surface with a lipid to obtain improved stability in organic solvents.

In WO 00/50521 a marine antifouling composition is disclosed. The composition comprises a binder which may be silicone, an amylolytic or proteolytic enzyme and a microorganism.

### SUMMARY OF THE INVENTION

The present inventors have now developed paint compositions for preparing new polysiloxane-based fouling release coatings (i.e. a cured paint coat) which comprise one or more enzymes. In this way, the advantages of silicone fouling release are combined with those of traditional anti-fouling coatings, thus gaining a foul-free, low-friction surface.

So, in a first aspect the present invention relates to a cured fouling release coat comprising a polysiloxane-based binder matrix and one or more enzymes capable of preventing settling by one or more bio-fouling species.

A second aspect of the invention relates to a kit for preparing a fouling release coat as defined herein, said kit comprising a first container holding a polysiloxane binder base, and a second container holding a siloxane curing agent and optionally a catalyst, wherein the polysiloxane binder base of the first container is curable in the presence of the content of the second container. The one or more enzyme is either a constituent of the first container or a constituent of the second container, or alternatively kept separately in a third container.

In currently preferred embodiments of the above aspects, a) the coat further comprises one or more hydrophilic-modified polysiloxanes oils; and/or b) the binder matrix has included as a part thereof hydrophilic oligomer/polymer moieties.

A third aspect of the invention relates to a method of coating a surface of a substrate, comprising the sequential steps of:
a. applying one or more layers of a primer composition and/or applying one or more layers of a tie-coat composition onto the surface of said substrate, and
b. applying one or more layers of a coating composition so as to obtain a fouling release coat as defined herein on the coated surface of said substrate.

A fourth aspect of the invention relates to a marine structure comprising on at least a part of the outer surface thereof an outermost fouling release coat as defined herein.

### DETAILED DISCLOSURE OF THE INVENTION

### The cured paint coat

As mentioned above, the present invention provides a cured paint coat comprising a polysiloxane-based binder matrix from a polysiloxane based binder which is a functional organopolysiloxane with terminal and/or pendant functionality, said polysiloxane-based binder matrix constituting at 50-90 % by dry weight of the coat, and one or more enzymes.

The paint coat is preferably used as the top coat in a coating system comprising two or more paint coat layers (e.g. at least a primer coat and a tie coat in addition to the top coat).

### The one or more enzymes

Inclusion of the one or more enzymes in the fouling release coat improves the resistance towards bio-fouling of said polysiloxane-based fouling release coat. The enzymes contribute to the fouling release properties of the coating by preventing settlement before or during, or alternatively reverting settlement. Even though siloxane-based fouling release coatings are very good at hindering settlement of bio-fouling organisms, enzymes can contribute to the overall antifouling ability of a fouling release coating, either by selected targeted mechanisms towards specifically troublesome bio-fouling species, or by a general improvement of the protection mechanism via a broad spectrum antifouling mechanism.

All enzymes capable of preventing settlement of bio-fouling organisms are considered relevant for this invention. However of particular interest are hydrolytic enzymes. Hydrolytic enzymes are those selected from EC class 3. Of particular interest are those selected from the following EC classes:
EC 3.1: ester bonds (esterases: nucleases, phosphodiesterases, lipase, phosphatase)
EC 3.2: sugars (DNA glycosylases, glycoside hydrolase)
EC 3.3: ether bonds
EC 3.4: peptide bonds (Proteases/peptidases)
EC 3.5: carbon-nitrogen bonds, other than peptide bonds
EC 3.6 acid anhydrides (acid anhydride hydrolases, including helicases and GTPase)
EC 3.7 carbon-carbon bonds
EC 3.8 halide bonds
EC 3.9: phosphorus-nitrogen bonds
EC 3.10: sulfur-nitrogen bonds
EC 3.11: carbon-phosphorus bonds
EC 3.12: sulfur-sulfur bonds
EC 3.13: carbon-sulfur bonds
EC 4.2: includes lyases that cleave carbon-oxygen bonds, such as dehydratases

In one embodiment, the one or more enzymes include a hydrolytic enzyme.

In one embodiment, the one or more enzymes are selected from EC classes: EC 3.1, EC 3.2, EC 3.4 and EC 4.2.

In another embodiment, the one or more enzymes are selected from serine proteases, cysteine proteases, metalloproteinase, cellulase, hemicellulase, pectinase, and glycosidases.

Commercial examples of enzymes which are believed to be useful are Savinase^{®} (ex Novozymes A/S), Endolase^{®} (ex Novozymes A/S), Alcalase^{®} (ex Novozymes A/S), Esperase^{®} (ex Novozymes), Papain (ex Sigmaaldrich), Subtilisin Carlsberg (ex Sigmaaldrich), pectinase (ex Sigmaaldrich), and polygalacturonase (ex Sigmaaldrich).

In one embodiment, the one or more enzymes include an enzyme which is capable of degrading the exopolymeric substances (i.e. adhesives) of barnacles. Thus, the enzyme must deter settlement of barnacle cypris larvae, preferably without killing or in other ways exerting the barnacle to toxic effects. The ability of an enzyme to reversibly hinder settlement of barnacles can be tested in accordance with the "Barnacles settlement test" described in the Experimentals section herein.

In another embodiment, the one or more enzymes include an enzyme which is capable of degrading the exopolymeric substances (i.e. adhesives) of algae. Thus the enzyme must deter settlement of algal zoospores, preferably without killing or in other ways exerting the algal zoospore to toxic effects. The ability of an enzyme to reversibly hinder settlement of algae can be tested in accordance with the "Algae settlement test" described in the Experimentals section herein.

In another embodiment, the one or more enzymes include an enzyme which is selected to exert an effect on specific organisms, be it toxic or not. Hence, in this embodiment, the effect of the enzyme may, in addition to being settlement lowering, also affect viability and mortality of the bio-fouling organism in question.

In some interesting embodiments, the one or more enzymes are pre-formulated before being mixed with other paint constituents. For example, the enzymes may be immobilized on or within filler particles, on binder constituents, or - if such constituents are also present - be formulated with hydrophilic mono-, oligo-, or polymers or with hydrophilic-modified polysiloxane oils (see further below).

In one interesting embodiment, the one or more enzymes (or one or some of the one or more enzymes) are formulated, e.g. either by surface treatment or by immobilisation.

In one variant, the one or more enzymes may be entrapped in an aerogel, xerogel, or kryogel-type matrix in a manner similar to that described in WO 2009/062975, in order to obtain stability in the wet paint, compatibility with the cured coat and controlled release of the enzymes when the network of the encapsulation material is degraded by hydrolysis by seawater.

Similarly, the enzymes may be encapsulated in a polymeric material, similar to the material described in US 7,377,968, in order for the enzymes to be shielded from xylene, but not from seawater.

Another way of pre-treating the enzyme is by ionic interaction with either a polyanionic or polycationic material. Depending on the pI of the enzyme, a polymer carrying the suitable charge will affiliate strongly to enzymes giving rise to ionic cross-linking and thus stabilisation of the enzymes.

Adsorption onto a suitable material, such as clay or nitrocellulose, is an alternative way to obtain increased enzyme stability during the preparation, application and curing of an enzyme-containing fouling release coating.

Establishment of covalent bonds between enzymes, using bifunctional cross-linkers can also potentially improve the enzyme stability. This can be referred to as both cross-linking and copolymerisation. Cross-linked enzyme aggregates (CLEA ®) are commercially available for some of the more common enzymes.

Hence in one embodiment, the one or more enzymes are reacted with a bifunctional cross-linker so as to form enzyme aggregates.

Homo and hetero-bifunctional cross-linkers can be used to immobilise enzymes onto another activated material, such as a binder constituent. Hetero-bifunctional cross-linkers have the advantage of being selective in each end of the molecule. This ensures that the cross-linking only occurs between the molecules of interest. However, homo-bifunctional cross-linkers are also frequently used to immobilise enzymes onto a separate material. Immobilisation of enzymes may be performed before and after film curing, by either binding the enzyme to a precursor of the film or activating a cured film and binding the enzymes to the activated sites.

Also, modification of the surface of enzymes may improve their compatibility with solvents, such as oils or hydrophobic solvents. Poly(ethylene glycol) and fatty acids are commonly applied to render enzymes more compatible with the environments they are intended to be kept in.

Hence in one further embodiment, the enzyme is surface-modified, preferably with Poly(ethylene glycol).

The one or more enzyme applied to prevent settlement of bio-fouling organisms on the polysiloxane-based foul-release coating should preferably comprise at a maximum 5 wt%, e.g. 0.0005-4 wt%, such as 0.001-3 wt%, or 0.002-2 wt%, or 0.003-1.5 wt%, or 0.01-0.05 wt%, of the total weight of the foul-release paint coat, calculated as amount of pure enzyme compared to the total weight of the cured coating.

### Polysiloxane-based binder matrix

The fouling release coat of the invention has included therein a polysiloxane-based binder matrix. The binder is in the form of a cross-linked matrix which incorporates the one or more enzymes as well as other constituents, e.g. biocides, additives, pigments, fillers, etc., in the fouling release coat.

Hence, it should be understood that the polysiloxane-based binder matrix is made up of reactive polysiloxane binder components, e.g. functional organopolysiloxanes, cross-linkers, silicates (e.g. ethyl silicate), and the like. Thus, it is believed that the reaction between such components will result in the binder matrix in the form of a typically three-dimensional covalently interconnected network.

The cured paint coat may be formed in various ways, e.g. polymerization/cross-linking by formation of siloxane bonds through a condensation reaction or by the use of their reactive groups such as for example amine/epoxy, carbinol/isocyanate etc. Condensation reaction is preferred.

The polysiloxane-based binder matrix is prepared from a polysiloxane based binder which is a functional organopolysiloxane, with terminal and/or pendant functionality. The terminal functionality is preferred. The functionality can either be hydrolysable groups, such as for example alkoxy groups, ketoxime groups or the functionality can be silanol groups. A minimum of two reactive groups per molecule is preferred. If the molecule contains only two reactive groups, for example silanol groups, it may be necessary to use an additional reactant, a cross-linker, to obtain the desired cross-link density. The cross-linker can for example be an alkoxy silane such as methyltrimethoxysilane, but a wide range of useful silanes are available as will be described further on. The silane can be used as it is or as hydrolysation-condensation products of same. Although condensation cure is much preferred, the functionality of the organopolysiloxane is not limited to a condensation cure. If so desired, other types of curing can be utilized, for example amine/epoxy either alone or in combination with a condensation reaction. In such cases, the organopolysiloxane can have terminal groups of epoxy or amine and pendant hydrolysable groups, for example with alkoxyfunctionality.

In some embodiments, the fouling release coating composition including the polysiloxane-based binder system may be a reaction-curable composition or a condensation-curable composition as will be evident for the person skilled in the art. Examples hereof are a two-component condensation curing composition based on a silanol-reactive polydiorganosiloxane and a silane with hydrolysable groups, or a one-component condensation-curable composition based on a polydiorganosiloxane with alkoxy or other hydrolysable reactivity. Another example is a reaction curable composition based on an epoxyfunctional polysiloxane binder and an amine functional polysiloxane curing agent. Combinations of reaction-curable compositions and condensation-curable compositions are possible, if the binder or the curing agent (or both) includes condensation curable groups, such as alkoxy groups.

In one embodiment, the binder phase comprises (i) a binder and (ii) a cross-linking agent of which the binder (i) should include hydrolysable groups or other reactive groups so as to participate in the formation of the matrix.

The binder (i) typically constitutes 20-90 % by dry weight of the coating composition.

The cross-linking agent (ii) preferably constitutes 0-10 % by dry weight of the coating composition and is, e.g., an organosilicon compound represented by the general formula (2) shown below, a partial hydrolysis-condensation product thereof, or a mixture of the two:

Rₐ-Sᵢ-X₄₋ₐ (2)

wherein, each R represents, independently, an unsubstituted or substituted monovalent hydrocarbon group of 1 to 6 carbon atoms or a hydrolysable group, each X represents, independently, a hydrolysable group, and a represents an integer from 0 to 2, such as from 0 to 1.

The compound outlined in formula (2) acts as a cross-linker for the binder (i). The composition can be formulated as a one component curable RTV (room-temperature vulcanizable) by admixing the binder (i) and the cross-linking agent (ii). If the reactivity on the terminal Si-group of the binder (i) consist of readily hydrolysable groups, such as dimethoxy or trimethoxy, a separate cross-linker is usually not necessary to cure the film. The technology behind the curing mechanism and examples of cross-linkers is described in prior art (US 2004/006190).

In one embodiment, R represents a hydrophilic group such as a poly(oxyalkylene). In this case, it is preferred to have a C₂₋₅-alkyl spacer between the Si-atom and the polyoxyalkylene group. Hence, the organopolysiloxane may have oxyalkylene domains.

Preferred cross-linkers are those selected from tetramethoxysilane, tetraethoxysilane; tetrapropoxysilane; tetra-n-butoxysilane; vinyltris(methylethyloximino)silane; vinyltris-(acetoxime)silane; methyltris(methylethyloximino)silane; methyltris(acetoxime)silane; vinyltrimethoxysilane; methyltrimethoxysilane; vinyltris(isopropenoxy)silane; tetraacetoxy-silane; methyltriacetoxysilane; ethyltriacetoxysilane; vinyltriacetoxysilane; di-t-butoxy-diacetoxysilane; methyltris(ethyllactate)silane and vinyltris(ethyllactate)silane as well as hydrolysis-condensation products of the same.

Other interesting cross-linkers are those selected from vinyltriethoxysilane, methyltriethoxysilane, ethyltrimethoxysilane, ethyltrimethoxysilane, tetraisopropoxysilane, tetrabutoxysilane as well as hydrolysis-condensation products of the same.

In some interesting embodiments, the polysiloxane-based binder comprises a polydimethylsiloxane-based binder.

In other interesting embodiments, the binder may include fluoro-modifications, e.g. fluoroalkyl modified polysiloxane binders such as silanol-terminated poly(trifluoropropyl-methylsiloxane).

The polysiloxane-based binder matrix typically constitutes at least 40 % by dry weight, at least 50 % by dry weight, preferably at least 60 % by dry weight, e.g. at least 70 % by weight, in particular 50-90 % by dry weight, or 50-98 % by dry weight, e.g. 50-96 % by dry weight, in particular 60-95 % by dry weight, or 50-95 % by dry weight, or 60-94 % by dry weight, or 70-96 % by dry weight, or even 70-94 % by dry weight, or 75-93 % by dry weight, or 75-92 % by dry weight, of the coating composition.

### Hydrophilic-modified polysiloxane oils

The fouling release coat may further include hydrophilic-modified polysiloxane oils, i.e. constituents which do not form covalent bonds to the polysiloxane-based binder matrix. Hydrophilic-modified polysiloxane oils are widely used as surfactants and emulsifiers due to the content of both hydrophilic and lipophilic groups in the same molecule. In contrast to the polysiloxane components discussed above, the hydrophilic-modified polysiloxane oils are selected so that they do not contain groups that can react with the binder (or binder components) or the cross-linker (if present), hence the hydrophilic-modified polysiloxane oils are intended to be non-reactive, in particular with respect to the binder components. In particular, the hydrophilic-modified polysiloxane oils are devoid of any silicon-reactive groups such as Si-OH groups, hydrolysable groups such as Si-OR (such as alkoxy, oxime, acetoxy etc.) groups, etc., so as to avoid reaction with constituents of the polysiloxane-based binder system.

The non-reactive hydrophilic-modified polysiloxane oils are typically modified by the addition of non-ionic oligomeric or polymeric groups which can be polar and/or capable of hydrogen bonding, enhancing their interaction with polar solvents, in particular with water, or with other polar oligomeric or polymeric groups. Examples of these groups include, amides (e.g. poly(vinyl pyrrolidone), poly[N-(2-hydroxypropyl)methacrylamide]), poly(N,N-dimethacrylamide), acids (e.g. poly(acrylic acid)), alcohols (e.g. poly(glycerol), polyHEMA, polysaccharides, poly(vinyl alcohol)), ketones (polyketones), aldehydes (e.g. poly(aldehyde guluronate), amines (e.g. polyvinylamine), esters (e.g. polycaprolactones, poly(vinyl acetate)), ethers (e.g. polyoxyalkylenes like poly(ethylene glycol), poly(propylene glycol)), imides (e.g. poly(2-methyl-2-oxazoline)), etc., including copolymers of the foregoing. Preferably the hydrophilicity is obtained by modification with polyoxyalkylene groups.

As before, it should be understood that the hydrophilic oligomer/polymer moieties with which the polysiloxane oils are modified are of non-silicon origin. Preferably, the above-mentioned "oligomers" and "polymers" include at least 3 repeating units, such as at least 5 repeating units. In many interesting embodiments, the oligomers or polymers include 3-1,000 repeating units, such as 3-200, or 5-150, or 5-100 repeating units.

In some preferred embodiments, the hydrophilic groups (i.e. oligomeric or polymeric groups) have a number average molecular weight (Mₙ) in the range of 100-50,000 g/mol, such as in the range of 100-30,000 g/mol, in particular in the range of 200-20,000 g/mol, or in the range of 200-10,000 g/mol.

In the present description with claims, the term "hydrophilic-modified" in the context of "hydrophilic-modified polysiloxane oil" is intended to mean that the oligomeric or polymeric groups with which the polysiloxane is modified, in themselves (i.e. as discrete molecules) have a solubility of at least 1 %(w/w) in demineralized water at 25°C.

Of particular interest are those hydrophilic-modified polysiloxane oils in which the relative weight of the hydrophilic moieties is 1% or more of the total weight (e.g. 1-90%), such as 5% or more (e.g. 5-80%), in particular 10% or more (e.g. 10-70%) of the total weight of the hydrophilic-modified polysiloxane oil.

In a preferred embodiment, the hydrophilic-modified polysiloxane oil (if present) has a number average molecular weight (Mₙ) in the range of 100-100,000 g/mol, such as in the range of 250-75,000 g/mol, in particular in the range of 500-50,000 g/mol.

It is also preferred if the hydrophilic-modified polysiloxane oils (if present) have a viscosity in the range of 10-20,000 mPa·s, such as in the range of 20-10,000 mPa·s, in particular in the range of 40-5,000 mPa·s.

The hydrophilic-modified polysiloxane oils may be utilized to control the accessibility of the one or more enzymes and/or to control the leaching of any biocides, as well as to distribute the enzyme in the wet paint.

In one currently preferred embodiment, the hydrophilic-modified polysiloxane oil is a poly(oxyalkylene)-modified polysiloxane.

In one variant hereof, the poly(oxyalkylene)-modified polysiloxane oil is a polysiloxane having grafted thereto poly(oxyalkylene) chains. An illustrative example of the structure of such hydrophilic-modified polysiloxane oils is formula (A): 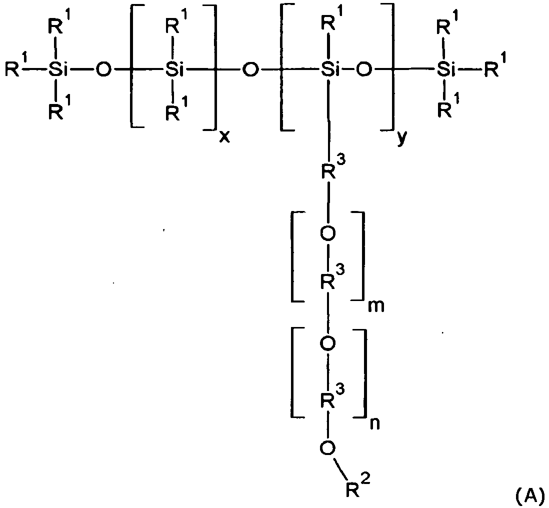 wherein each R¹ is independently selected from C₁₋₅-alkyl (including linear or branched hydrocarbon groups) and aryl (e.g. phenyl (-C₆H₅)), in particular methyl; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C_{Z}_₅-alkylene (e.g. -CH₂CH₂-, -CH₂CH(CH₃)-, -CH₂CH₂CH₂-, -CH₂CH₂CH₂CH₂-, -CH_{z}CH(CH_{z}CH₃)-), arylene (e.g. 1,4-phenylene) and C₂₋₅- alkylene substituted with aryl (e.g. 1-phenyl ethylene), in particular from C₂₋₅-alkylene such as -CH₂CH₂- and -CH₂CH(CH₃)-); x is 0-2500, y is 1-100 and x+y is 1-2000; and n is 0-50, m is 0-50 and m+n is 1-50.

Commercially available hydrophilic-modified polysiloxane oils of this type are DC5103 (Dow Corning), DC Q2-5097 (Dow Corning), and DC193 (Dow Corning).

In another variant hereof, the poly(oxyalkylene)-modified polysiloxane oil is a polysiloxane having incorporated in the backbone thereof poly(oxyalkylene) chains. An illustrative example of the structure of such hydrophilic-modified polysiloxane oils is formula (B): 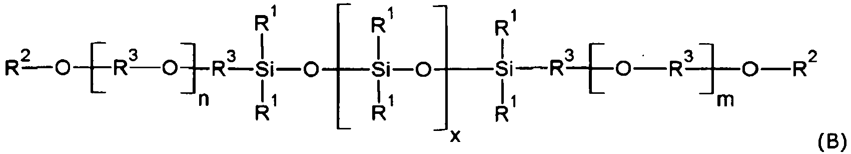 wherein each R¹ is independently selected from C₁₋₅-alkyl (including linear or branched hydrocarbon groups) and aryl (e.g. phenyl (-C₆H₅)), in particular methyl; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅- alkylene substituted with aryl (e.g. 1-phenyl ethylene), in particular from C₂₋₅-alkylene such as -CH₂CH₂- and -CH₂CH(CH₃)-); x is 0-2500; and n is 0-50, m is 0-50 and m+n is 1-50.

Commercially available hydrophilic-modified polysiloxane oils of this type are DC Q4-3669 (Dow Corning), DC Q4-3667 (Dow Corning) and DC2-8692.

In still another variant hereof, the poly(oxyalkylene)-modified polysiloxane oil is a polysiloxane having incorporated in the backbone thereof polyoxyalkylene chains and having grafted thereto polyoxyalkylene chains. An illustrative example of the structure of such hydrophilic-modified polysiloxane oils is formula (C): 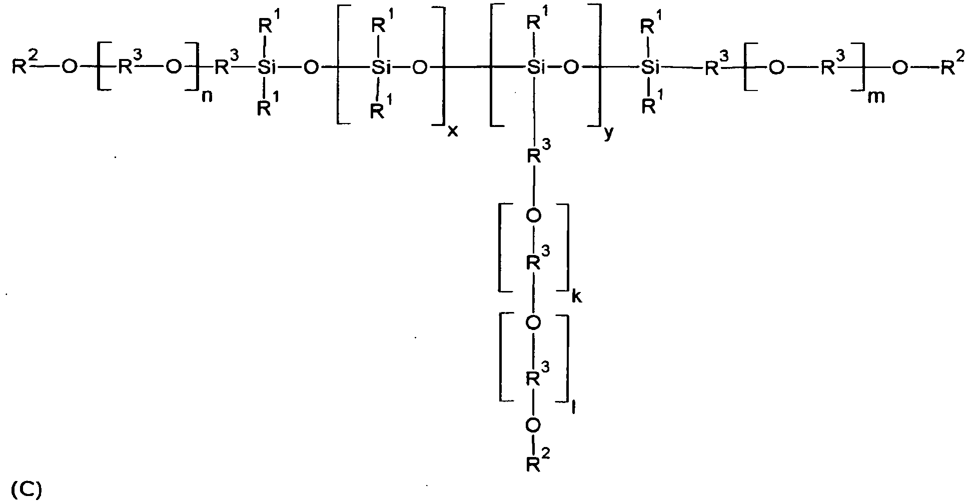 wherein each R¹ is independently selected from C₁₋₅-alkyl (including linear or branched hydrocarbon groups) and aryl (e.g. phenyl (-C₆H₅)), in particular methyl; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂Ch₃)-), arylene (e.g. 1,4-phenylene) and C₂₋₅- alkylene substituted with aryl (e.g. 1-phenyl ethylene), in particular from C₂₋₅-alkylene such as -CH₂CH₂- and -CH₂CH(CH₃)-); x is 0-2500, y is 1-100 and x+y is 1-2000; k is 0-50, I is 0-50 and k+l is 1-50; and n is 0-50, m is 0-50 and m+n is 1-50.

In the above structures (A), (B) and (C), the groups -CH₂CH(CH₃)-, -CH₂CH(CH₂CH₃)-, etc. may be present in any of the two possible orientations. Similarly, it should be understood that the segments present x and y times typically are randomly distributed, or distributed as blocks, within the polysiloxane structure.

In these embodiments and variants, the poly(oxyalkylene) is preferably selected from polyoxyethylene, polyoxypropylene and poly(oxyethylene-co-oxypropylene), which sometimes are referred to as poly(ethylene glycol), poly(propylene glycol) and poly(ethylene glycol-co-propylene glycol). Hence, in the above structures (A), (B) and (C), each R³ linking two oxygen atoms is preferably selected from -CH₂CH₂- and -CH₂CH(CH₃)-, whereas each R³ linking a silicon atom and an oxygen atom preferably is selected from C₂₋₅-alkyl.

It should be understood that the one or more non-reactive hydrophilic-modified polysiloxane oils if present may be of different types, e.g. two or more of the types described above.

If present, the one or more hydrophilic-modified polysiloxane oils are typically included in the coating composition in an amount of 0.01-20 %, e.g. 0.05-10 %, by dry weight. In certain embodiments, the one or more hydrophilic-modified polysiloxane oils constitutes 0.05-7 % by dry weight, e.g. 0.1-5 % by dry weight, in particular 0.5-3 % by dry weight, of the coating composition. In certain other embodiments, the one or more hydrophilic-modified polysiloxane oils constitutes 1-10 % by dry weight, e.g. 2-9 % by dry weight, in particular 2-7 % by dry weight, or 3-7 % by dry weight, or 3-5 % by dry weight, or 4-8 % by dry weight, of the coating composition.

### Fluorinated oils

As an alternative to, or in addition to, the hydrophilic-modified polysiloxane oils, the coating composition (and thereby the paint coat) may have included therein one or more fluorinated oil(s). By the term "oil" is inherently meant that the constituent does not form covalent bonds to the polysiloxane-based binder matrix. Hence, the fluorinated oil(s) do not contain groups that can react with the binder (or binder components) or the cross-linker (if present), hence the one or more fluorinated oil(s) are intended to be non-reactive, in particular with respect to the binder components. In particular, the fluorinated oils are devoid of any silicon-reactive groups such as Si-OH groups, hydrolysable groups such as Si-OR (such as alkoxy, oxime, acetoxy etc.) groups, etc., so as to avoid reaction with constituents of the polysiloxane-based binder system.

It is preferred that the one or more fluorinated oil(s) (if present) have a viscosity in the range of 10-20,000 mPa·s, such as in the range of 20-10,000 mPa·s, in particular in the range of 40-5,000 mPa·s.

In a preferred embodiment, the fluorinated oil(s) (if present) has a number average molecular weight (Mₙ) in the range of 100-100,000 g/mol, such as in the range of 250-75,000 g/mol, in particular in the range of 500-50,000 g/mol.

The one or more fluorinated oils may be utilized to control the accessibility of the one or more enzymes and/or to control the leaching of any biocides, as well as to distribute the enzyme in the wet paint.

In one embodiment, the one or more fluorinated oils are selected from fluoroalkyl modified oils, e.g. perfluorinated oils, perfluoroalkyl-modified polysiloxane, perfluoro siloxane, perfluoro polyether, perfluorinated alkanes, or perfluoroalkyl modified polyalkylene oxide, perfluoro polyalkylene oxide.

Commercially available examples of such oils are: 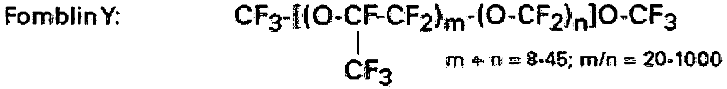 Lumiflon LF-200: (Fluoroethylene-Alkyl Vinyl Ether) alternating copolymer.

In another embodiment, the one or more fluorinated oils are selected from fluoroalkyl modified polyoxyalkylene polysiloxane oils (e.g. PEG-PDMS). These compounds are polysiloxanes which have been modified with fluoroalkylene and polyoxyalkylene, and can have a linear or branched/pendant conformation, or a combination of a linear and branched/pendant conformation. In the linear form, the polymer will generally have the structure A-B-C where A is a fluoroalkyl group, B is a polysiloxane and C is a polyoxyalkylene. Therefore, it will only have one fluoroalkyl group and one polyoxyalkylene group per polysiloxane molecule. In a variation, the modification of the polysiloxane molecule is in a branched/pendant conformation, in which the fluoroalkylene group(s) and the polyoxyalkylene group(s) are attached to the polysiloxane backbone in non-terminal positions. This allows more than one of each group per polysiloxane molecule. Examples of possible synthetic routes are disclosed in US 5,445,114.

This type of fluorinated oils appears to provide certain advantages. Without being bound to any particular theory, it is believed (i) that the migration of the oils to the surface of the coating during curing may be higher due to the fluorination; (ii) that the fluorination may lower the affinity of the oil to adsorb to pigments compared to non-fluorinated analogues.

Commercially available examples of such oils are Fluorosil 2110, a perfluoro nonyl ethyl PEG-8 dimethicone and C1910, a fluorinated silicone polyether of the same generic structure as Fluorosil 2110.

It should be understood that the one or more non-reactive fluorinated oil(s), if present, may be of different types, e.g. two or more of the types described above.

If present, the one or more fluorinated oils are typically included in the coating composition in an amount of 0.01-20 %, e.g. 0.05-10 %, by dry weight. In certain embodiments, the one or more fluorinated oils constitutes 0.05-7 % by dry weight, e.g. 0.1-5 % by dry weight, in particular 0.5-3 % by dry weight, of the coating composition. In certain other embodiments, the one or more fluorinated oils constitutes 1-10 % by dry weight, e.g. 2-9 % by dry weight, in particular 2-7 % by dry weight, or 3-7 % by dry weight, or 3-5 % by dry weight, or 4-8 % by dry weight, of the coating composition.

Also, if present together with one or more hydrophilic-modified polysiloxane oils, the one or more fluorinated oils and the one or more hydrophilic-modified polysiloxane oils are typically included in the coating composition in a combined amount of 0.01-20 %, e.g. 0.05-10 %, by dry weight. In certain embodiments, the one or more fluorinated oils constitutes 0.05-7 % by dry weight, e.g. 0.1-5 % by dry weight, in particular 0.5-5 % by dry weight, of the coating composition. In certain other embodiments, the one or more fluorinated oils constitutes 1-10 % by dry weight, e.g. 2-9 % by dry weight, in particular 2-7 % by dry weight, or 3-7 % by dry weight, or 2-6 % by dry weight, or 3-5 % by dry weight, or 4-8 % by dry weight, of the coating composition.

### Hydrophilic modification of the binder matrix

In some interesting embodiments, the binder matrix has included as a part thereof hydrophilic oligomer/polymer moieties.

In one embodiment, the binder includes a curable diorganopolysiloxane represented by a general formula (1) shown below: 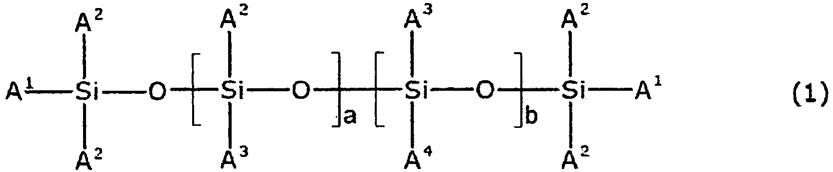 wherein each A¹ is independently selected from a hydroxyl group, a hydrolysable group and another functional group, such as amine or epoxy; each A² is independently selected from alkyl, aryl, alkenyl and a hydrolysable group; each A³ and A⁴ is independently selected from alkyl, aryl alkenyl and a hydrophilic group, such as a polyoxyalkylene group, wherein, if A³ and/or A⁴ is a hydrophilic group, such as a polyoxyalkylene group, such group may be attached to the silicon atom via a C₂₋₅-alkylene linker; a = 1-25,000, b = 1-2,500 and a+b is at least 5.

In one alternative embodiment, the binder includes a curable diorganopolysiloxane represented by a general formula (1x) shown below: 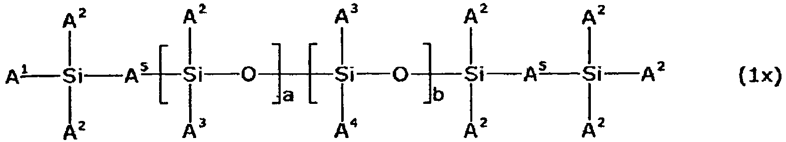 wherein each of A¹, A², A³, A⁴, a and b are as above for formula (1) and wherein each A⁵ is independently selected from oxygen or an alkyl group of 2-5 carbon atoms.

In another embodiment, the polysiloxane binder has hydrophilic oligomer/polymer moieties grafted as side chains (pendant hydrophilic groups), as depicted below, and can be prepared by a hydrosilylation reaction between a hydride functional polysiloxane and a hydrophilic component containing an unsaturated group (-CH=CH₂) such as for example an allyl or vinyl group, in presence of a hydrosilylation catalyst, such as platinum, in accordance with formula (1c), where the example of a hydrophilic compound is an allyl-terminated poly(ethylene glycol). The synthesis is carried out at elevated temperatures, such as 60-150°C. To render the polymer curable, it is necessary to functionalise it with a hydrolysable, or by other means reactive, group, such as vinyltrimethoxysilane. The reaction is following same principles as when grafting the hydrophilic compound to the polysiloxane, and it is outlined in formula (1b), and the functionalization may be done, but not necessarily, prior to the bonding of a hydrophilic group.

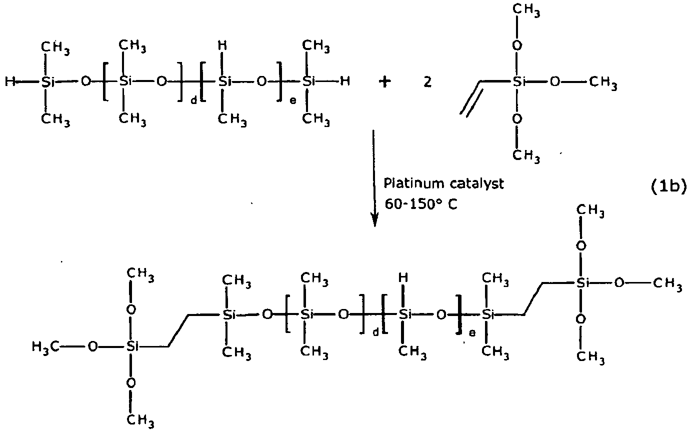

The resulting binder from the reaction (1b) is further modified with a hydrophilic component, for example poly(ethylene glycol) mono allyl ether as outlined in formula (1c) resulting in a curable, polysiloxane modified with hydrophilic oligomer/polymer moieties.

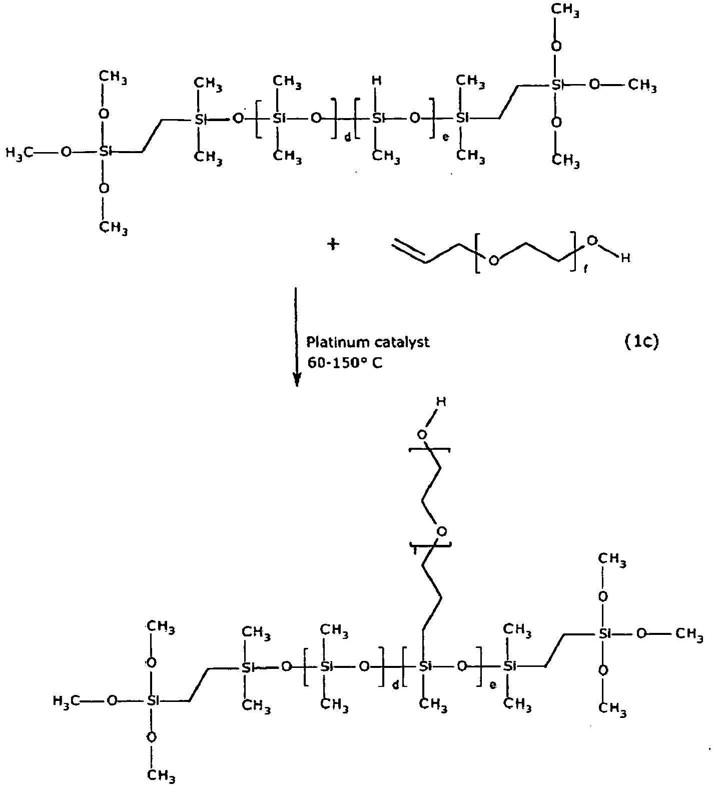

The binder obtained can be used as is, or in combination with a curable diorganosiloxane (of the generic type presented in formula 1). As previously described, hydrophilic polymers other than poly(ethylene glycol) are also useful for rendering the polysiloxane hydrophilic.

It is possible to graft the hydrophilic pendant moieties to the polysiloxane prior to grafting the hydrolysable silane to the polysiloxane (i.e. in reverse order than the synthesis described in formulae (1b) and (1c).

Hence, in one interesting embodiment, the cured paint coat comprising a polysiloxane-based binder matrix has included as a part thereof pendant hydrophilic oligomer/polymer moieties.

The expression "pendant" means that the hydrophilic oligomer/polymer moieties are attached to the polysiloxane backbone at a non-terminal position and that such moieties are attached at only the one end so that the pendant hydrophilic oligomer/polymer forms a "graft" to the polysiloxane backbone (matrix). This is can also be referred to as "branched".

Pendant hydrophilic oligomers/polymer moieties may in principle at the free end carry functional (non-reactive) groups at the free end, e.g. groups exhibiting a biocidal effect, etc. However, in most embodiments, the hydrophilic oligomers/polymer moieties are not carrying such functional groups, but are in the form of the native oligomer/polymer form, possibly end-capped, like with an alkyl group, or possibly with a hydroxyl group or methoxy terminated.

Another variation of the binder is an A-B-A copolymer of polysiloxane (A) and a hydrophilic polymer (B), such as poly(oxyalkylene). An example of the structure of the polymer is depicted in formula (1d). In this variation, units of a polymer with hydrophilic character, such as polyoxyalkylene are introduced in the backbone of the polysiloxane to form an alternating block copolymer. Introducing hydrophilic groups such as oxyalkylene groups in the binder may increase the hydrophilicity of the binder as described in reference WO 2008/132196. The binders can be used alone or in combination, and the structure of the copolymer can be A-B-A and B-A-B. In case of B-A-B, a pendant curable functionality is required, since the terminal groups of the silicone portion would be blocked by the hydrophilic polymer.

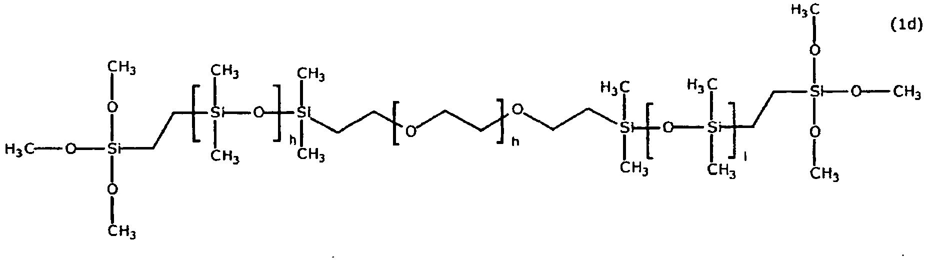

In yet another variant, the hydrophilic component is obtained by hydrosilylation of a polyoxyalkylene compound containing at least one, unsaturated group (-CH=CH₂) such as an allyl or a vinyl group, with a silane having a hydride group, e.g. HSi(R*)₃ groups, wherein each R* independently is selected from C₁₋₄-alkyl and C₁₋₄-alkoxy (e.g. methyl, ethyl, propyl, butyl, methoxy, ethoxy, propoxy, and butoxy), at least one being C₁₋₄-alkoxy, such as for example trimethoxysilane, triethoxysilane or methyldimethoxysilane, in the presence of a hydrosilylation catalyst, such as platinum, yielding a curable poly(oxyalkylene). The reaction is carried out at elevated temperatures, such as 60-150°C. The synthesis is outlined in formula (1e). The polymer has to be used in combination with, e.g., component (i) (formula 1). Further examples of useful silanes include, without being limited to, triethoxysilane, tripropoxysilane, tert-butyldiethoxysilane.

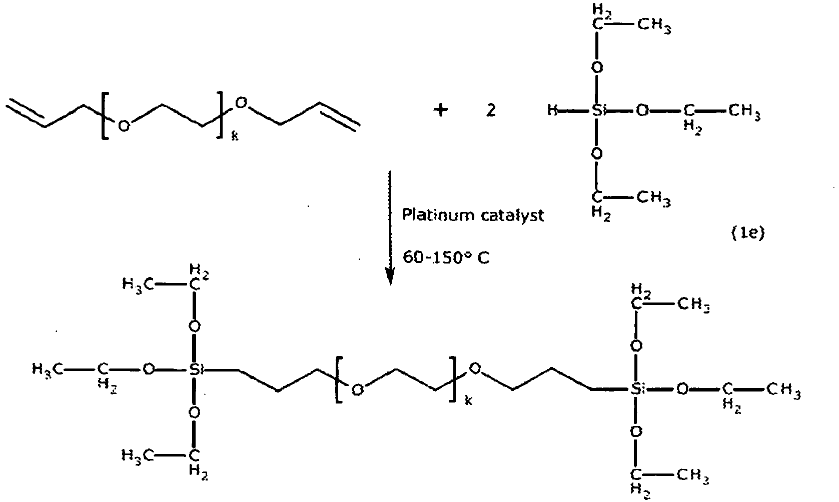

In one variant, the hydrophilicity may be obtained (or added to the hydrophilicity which may have been obtained by incorporating a hydrophilic group to binder (i) as outlined in previous section), by using a hydrophilic silane, such as the generic type expressed in formula (2a). The hydrophilic silane will react with the silanol or the hydrolysable groups in the binder component (formulae (1) or (1e)), and thereby incorporate a hydrophilic component. 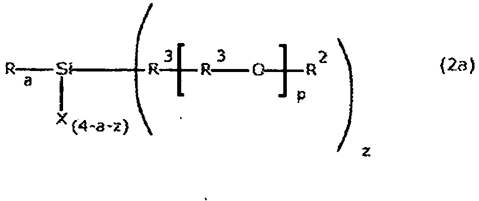 wherein, each R represents, independently, an unsubstituted or substituted monovalent hydrocarbon group of 1 to 6 carbon atoms or a hydrolysable group, each X represents, independently, a hydrolysable group, each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH) and -C(=O)CH₂CH₂CH), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-); p is 0-50; a is 0-2; z is 1-3.

Introducing oxyalkylene units in the organopolysiloxane will increase the hydrophilicity of the binder, especially when ethyleneoxide type -[CH₂CH₂-O]- is used.

Without being bound to any particular theory, it is believed that the function of the polysiloxane-based binder matrix rendered hydrophilic by means of oligomer/polymer moieties is to facilitate the transport and accessibility of the one or more enzymes and any biocides at the surface upon contact with sea-water. Potentially, a hydrated layer formed at the coating-water interphase will also aid in retaining the enzyme and/or biocide at the surface, hence allowing the coating to exert its fouling deterrent activity for extended exposure intervals.

In a further embodiment, the hydrophilic modification of the binder consists of both A-B-A modifications (as described above) and of pendant hydrophilic oligomer/polymer moieties.

It should be understood that the hydrophilic oligomer/polymer moieties forms a part of the polysiloxane-based binder matrix, i.e. that the moieties are covalently incorporated into the binder matrix. It should also be understood that the formed covalent bond(s) preferably are non-hydrolysable.

The polysiloxane-based binder matrix typically constitutes at least 40 % by dry weight, at least 50 % by dry weight, preferably at least 60 % by dry weight, e.g. at least 70 % by weight, in particular 50-90 % by dry weight, or 50-98 % by dry weight, e.g. 50-96 % by dry weight, in particular 60-95 % by dry weight, or 50-95 % by dry weight, or 60-94 % by dry weight, or 70-96 % by dry weight, or even 70-94 % by dry weight, or 75-93 % by dry weight, or 75-92 % by dry weight, of the cured paint coat.

The term "polysiloxane-based binder matrix" is intended to mean that the binder matrix mainly consists of polysiloxane parts, i.e. that more than 50 % by weight, preferably more than 60 % by weight, e.g. more than 70 % by weight, of the binder matrix is represented by polysiloxane parts. Preferably the polysiloxane parts constitute 50-99.99 % by weight, e.g. 50-99.9 % by weight, in particular 60-99.5 % by weight, or 50-99 % by weight, or 60-98 % by weight, or 70-97 % by weight, or even 70-99 % by weight, or 80-98 % by weight, or 90-97 % by weight, of the binder matrix (i.e. the binder components and any cross-linkers). The remainder of the binder matrix is e.g. made of any hydrophilic oligomer/polymer moieties and any (non-polysiloxane-type) cross-linkers. This being said, the hydrophilic oligomer/polymer moieties preferably makes up 1-30 % by weight, such as 2-20 % by weight, e.g. 1-10 % by weight, of the binder matrix.

It should of course be understood that the hydrophilic oligomer/polymer moieties which are included in the polysiloxane-based binder matrix are of non-silicon origin.

When calculating the amount of the polysiloxane parts and the hydrophilic oligomer/polymer moieties, respectively, for a given starting material (or an adduct), it is typically fairly straightforward to distinguish between the two. However, in order to eliminate any doubt about any linkers between the two, it should be understood that the hydrophilic oligomer/polymer moieties include all atoms up to, but not including, the silicon atom which is adjacent to the hydrophilic oligomer/polymer moiety. As an example, in a structure of the type [polysiloxane-O]-Si(Me)₂-CH₂CH₂CH₂-[hydrophilic oligomer]-CH₂CH₂CH₂-Si(Me)₂-[O-polysiloxane], the [polysiloxane-O]-Si(Me)₂ parts are accounted for as silicone parts, whereas the CH₂CH₂CH₂-[hydrophilic oligomer]-CH₂CH₂CH₂ moiety is accounted for as the hydrophilic oligomer moiety.

Suitable hydrophilic oligomer/polymer moieties are those selected from poly(vinyl pyrrolidone), poly[N-(2-hydroxypropyl)methacrylamide], poly(N,N-dimethacrylamide), poly(acrylic acid), poly(glycerol), polyHEMA, polysaccharides, poly(vinyl alcohol), polyketones, poly(aldehyde guluronate), polyvinylamine, polycaprolactones, poly(vinyl acetate), polyoxyalkylenes like poly(ethylene glycol), poly(propylene glycol), poly(2-methyl-2-oxazoline), etc., including copolymers of the foregoing. Preferably the hydrophilicity is obtained by modification with polyoxyalkylene moieties.

Incorporation of the above mentioned hydrophilic oligomer/polymer into the polysiloxane polymer backbone is typically done through a linking group. The linking group is understood as the product of the reaction of two mutually reaction functional groups; one functional group on the polysiloxane backbone and one on the hydrophilic oligomer/polymer. E.g. an amine linking group is result of for example - but not exclusively - the reaction of a glycidyl ether with a primary or secondary amine. Examples of useful linking groups between the hydrophilic oligomer/polymer and the polysiloxane backbone are: amine groups, ether groups, amide groups. 1,2,3-triazole, C-C bonds, C-C double bonds, C-C triple bonds, Si-C bonds, C-S bonds, S-S bonds, urethane group, urea groups. Most preferred linking group is the Si-C bond prepared by hydrosilylation reaction catalyzed by platinum where the functional group on the polysiloxane backbone is a hydride and the functional group on the hydrophilic oligomer/polymer is an allyl group.

In some embodiments, it is preferred that the hydrophilic oligomer/polymer moieties provide a permanent hydrophilic contribution to the binder matrix. Hence, in such embodiments, the hydrophilic oligomer/polymer moieties are preferably devoid of any bonds which are hydrolysable in sea-water. Hence, preferably, the hydrophilic oligomer/polymer moieties do not include ester bonds or acid anhydride bonds.

In the present context oligomer/polymer moieties are understood as those encompassing at least 3 repeating units, such as at least 5 repeating units. Typically, oligomer/polymer moieties used for modification include 3-1,000 repeating units, such as 3-200, or 5-150, or 5-100, or 10-80, or 5-20, repeating units.

In some preferred embodiments, the hydrophilic oligomer/polymer moieties (i.e. oligomeric or polymeric groups incorporated into the binder matrix) have a number average molecular weight (Mₙ) in the range of 100-50,000 g/mol, such as in the range of 100-30,000 g/mol, in particular in the range of 150-20,000 g/mol, or in the range of 200-10,000 g/mol.

In the present description with claims, the terms "hydrophilic oligomer/polymer moieties", "hydrophilic polymer moieties", and similar are intended to mean that the oligomeric or polymeric moieties, in themselves (i.e. when represented as discrete molecules) have a solubility of at least 1 %(w/w) in demineralized water at 25°C.

When the polysiloxane-based binder system discussed above is characterized by having included therein, as a part of the binder matrix, one or more polysiloxane components which are modified with hydrophilic oligomer/polymer moieties, such polysiloxane components will upon reaction with other polysiloxane components and cross-linkers provide hydrophilic properties to the binder system. Alternatively, hydrophilic oligomer/polymer moieties functionalized with reactive silanes which enable them to react with the polysiloxane binder, or the hydrophilic oligomer/polymer moieties, and form a non-hydrolysable bond, may also be used.

The polysiloxane components must include silicon-reactive groups such as Si-OH groups, hydrolysable groups such as Si-OR (such as alkoxy, oxime, acetoxy etc.) groups, etc., so as to facilitate reaction with other constituents of the polysiloxane-based binder system.

In one currently preferred embodiment of the above, the hydrophilic oligomer/polymer moiety is a poly(oxyalkylene) moiety.

### The coating composition

The present invention also provides a fouling release coating composition comprising a polysiloxane-based binder system, said binder system comprising one or more polysiloxane components modified with hydrophilic oligomer/polymer moieties, and one or more enzymes. Such a coating composition gives rise to the cured fouling release coat upon drying/curing.

The polysiloxane-based binder system typically constitutes at least 40 % by dry weight, at least 50 % by dry weight, preferably at least 60 % by dry weight, e.g. at least 70 % by weight, in particular 50-90 % by dry weight, or 50-98 % by dry weight, e.g. 50-96 % by dry weight, in particular 60-95 % by dry weight, or 50-95 % by dry weight, or 60-94 % by dry weight, or 70-96 % by dry weight, or even 70-94 % by dry weight, or 75-93 % by dry weight, or 75-92 % by dry weight of the coating composition.

The term "polysiloxane-based binder system" is intended to mean that the binder system mainly consists of polysiloxane parts, i.e. that more than 50 % by weight, preferably more than 60 % by weight, e.g. more than 70 % by weight, of the binder system is represented by polysiloxane parts. Preferably, the polysiloxane parts constitute 50-99.99 % by weight, e.g. 50-99.9 % by weight, in particular 60-99.5 % by weight, or 50-99 % by weight, or 60-98 % by weight, or 70-97 % by weight, or even 70-99 % by weight, or 80-98 % by weight, or 90-97 % by weight, of the binder system (i.e. the binder components and any cross-linkers). The remainder of the binder system is preferably made of the hydrophilic oligomer/polymer moieties and any (non-polysiloxane-type) cross-linkers. This being said, the hydrophilic oligomer/polymer moieties preferably makes up 1-30 % by weight, such as 2-20 % by weight, e.g. 1-10 % by weight, of the binder system.

The present invention further provides a fouling release coating composition comprising a polysiloxane-based binder system, 0.01-20 % by dry weight of one or more hydrophilic-modified polysiloxanes, and one or more enzymes.

The present invention further provides a polysiloxane-based binder system comprising a silanol-functional binder and a curing agent of the formula (1e) or (2a), and one or more enzymes.

The description and embodiments, etc. above with respect to the polysiloxane-based binder system, the enzymes, the hydrophilic oligomer/polymer moieties, the hydrophilic modified polysiloxane oils, etc. also applies for the two types of coating compositions.

### Biocides

The coating composition used for forming the cured fouling release coat may include one or more biocides.

In the present context, the term "biocide" is intended to mean an active substance intended to destroy, deter, render harmless, prevent the action of, or otherwise exert a controlling effect on any harmful organism by chemical or biological means. It should be understood, that the biocide(s) - if present - is used in addition to the one or more enzymes.

Illustrative examples of biocides are those selected from metallo-dithiocarbamates such as bis(dimethyldithiocarbamato)zinc, ethylene-bis(dithiocarbamato)zinc, ethylene-bis(dithio-carbamato)manganese, and complexes between these; bis(1-hydroxy-2(1H)-pyridine-thionato-O,S)-copper; copper acrylate; bis(1-hydroxy-2(1H)-pyridinethionato-O,S)-zinc; phenyl(bispyridyl)-bismuth dichloride; metal biocides such as copper(I)oxide, cuprous oxide, metallic copper, copper metal alloys such as copper-nickel alloys; metal salts such as cuprous thiocyanate, basic copper carbonate, copper hydroxide, barium metaborate, and copper sulphide; heterocyclic nitrogen compounds such as 3a,4,7,7a-tetrahydro-2-((trichloro-methyl)-thio)-1H-isoindole-1,3(2H)-dione, pyridine-triphenylborane, 1-(2,4,6-trichloro-phenyl)-1H-pyrrole-2,5-dione, 2,3,5,6-tetrachloro-4-(methylsulfonyl)-pyridine, 2-methylthio-4-tert-butylamino-6-cyclopropylamine-s-triazin, and quinoline derivatives; heterocyclic sulfur compounds such as 2-(4-thiazolyl)benzimidazole, 4,5-dichloro-2-n-octyl-4-isothiazolin-3-one, 4,5-dichloro-2-octyl-3(2H)-isothiazoline (Sea-Nine^{®}-211N), 1,2-benzisothiazolin-3-one, and 2-(thiocyanatomethylthio)-benzothiazole; urea derivatives such as N-(1,3-bis(hydroxyl-methyl)-2,5-dioxo-4-imidazolidinyl)-N,N'-bis(hydroxymethyl)urea, and N-(3,4-dichloro-phenyl)-N,N-dimethylurea, N,N-dimethylchlorophenylurea; amides or imides of carboxylic acids; sulfonic acids and of sulfenic acids such as 2,4,6-trichlorophenyl maleimide, 1,1-dichloro-N-((dimethylamino)sulfonyl)-1-fluoro-N-(4-methylphenyl)-methanesulfenamide, 2,2-dibromo-3-nitrilo-propionamide, N-(fluorodichloromethylthio)-phthalimide, N,N-dimethyl-N'-phenyl-N'-(fluorodichloromethylthio)-sulfamide, and N-methylol formamide; salts or esters of carboxylic acids such as 2-((3-iodo-2-propynyl)oxy)-ethanol phenylcarbamate and N,N-didecyl-N-methyl-poly(oxyethyl)ammonium propionate; amines such as dehydroabiethyl-amines and cocodimethylamine; substituted methane such as di(2-hydroxy-ethoxy)methane, 5,5'-dichloro-2,2'-dihydroxydiphenylmethane, and methylene-bisthiocyanate; substituted benzene such as 2,4,5,6-tetrachloro-1,3-benzenedicarbonitrile, 1,1-dichloro-N-((dimethyl-amino)-sulfonyl)-1-fluoro-N-phenylmethanesulfenamide, and 1-((diiodomethyl)sulfonyl)-4-methyl-benzene; tetraalkyl phosphonium halogenides such as tri-n-butyltetradecyl phosphonium chloride; guanidine derivatives such as n-dodecylguanidine hydrochloride; disulfides such as bis-(dimethylthiocarbamoyl)-disulfide, tetramethylthiuram disulfide; imidazole containing compound, such as medetomidine; 2-(p-chlorophenyl)-3-cyano-4-bromo-5-trifluoromethyl pyrrole and mixtures thereof.

Presently, it is preferred that the biocide (if present) does not comprise tin.

Currently preferred biocides are those selected from the group consisting of 2,4,5,6-tetra-chloroisophtalonitrile (Chlorothalonil), copper thiocyanate (cuprous sulfocyanate), N-dichloro-fluoromethylthio-N',N'-dimethyl-N-phenylsulfamide (Dichlofluanid), 3-(3,4-dichlorophenyl)-1,1-dimethylurea (Diuron), N²-tert-butyl-N⁴-cyclopropyl-6-methylthio-1,3,5-triazine-2,4-diamine (Cybutryne), 4-bromo-2-(4-chlorophenyl)-5-(trifluoromethyl)-1H-pyrrole-3-carbonitrile, (2-(p-chlorophenyl)-3-cyano-4-bromo-5-trifluoromethyl pyrrole; Tralopyril), *N*²-*tert*-butyl-*N*⁴-cyclopropyl-6-methylthio-1,3,5-triazine-2,4-diamine (Cybutryne), (RS)-4-[1-(2,3-dimethylphenyl)ethyl]-3H-imidazole (Medetomidine), 4,5-dichloro-2-n-octyl-4-isothiazolin-3-one (DCOIT, Sea-Nine^{®} 211N), dichlor-N-((dimethylamino)sulfonyl)fluor-N-(p-tolyl)methansulfenamid (Tolylfluanid), 2-(thiocyanomethylthio)-1,3-benzothiazole ((2-benzothiazolylthio)methyl thiocyanate; TCMTB), triphenylborane pyridine (TPBP); bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione), zinc ethylene-1,2-bis-dithiocarbamate (zinc-ethylene-N-N'-dithiocarbamate; Zineb), copper(i) oxide, metallic copper, 3-(3,4-dichlorophenyl)-1,1-dimethylurea (Diuron) and diiodomethyl-p-tolylsulfone; Amical 48. Preferably at least one biocide is selected from the above list.

In a particularly preferred embodiment, the biocides are preferably selected among biocides which are effective against soft fouling such as slime and algae. Examples of such biocides are N²-tert-butyl-N⁴-cyclopropyl-6-methylthio-1,3,5-triazine-2,4-diamine (Cybutryne), 4,5-dichloro-2-n-octyl-4-isothiazolin-3-one (DCOIT, Sea-Nine^{®} 211N), bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione; Copper Omadine) and zinc ethylene-1,2-bis-dithiocarbamate (zinc-ethylene-N-N'-dithiocarbamate; Zineb), copper(I) oxide, metallic copper, copper thiocyanate, (cuprous sulfocyanate), bis(1-hydroxy-2(1H)-pyridinethionato-O,S)-T-4) copper (copper pyridinethione; copper pyrithione; Copper Omadine).

In a further particularly preferred embodiment, the biocide is an organic biocide, such as a pyrithione complex, such as zinc pyrithione, or such as copper pyrithione. Organic biocides are those either fully or in part being of organic origin.

As detailed in US 7,377,968, in those instances in which the biocide is depleted rapidly from the film due to e.g. a high water solubility or a high level of immiscibility with the matrix composition, it can be advantageous to add one or more of the biocide(s) in encapsulated form as a means of controlling the biocide dosage and extending the effective lifetime in the film. Encapsulated biocides can also be added if the free biocide alters the properties of the polysiloxane matrix in a way that is detrimental for its use as antifouling coatings (e.g. mechanical integrity, drying times, etc.).

In a particularly preferred embodiment, the biocide is encapsulated 4,5-dichloro-2-n-octyl-4-isothiazolin-3-one (Sea-Nine CR2).

The biocide preferably has a solubility in the range of 0-20 mg/L, such as 0.00001-20 mg/L, in water at 25 °C.

If present, the biocide typically constitutes 0.1-15 % by dry weight, e.g. 0.5-8 % by dry weight, in particular 1-6 % by dry weight, of the coating composition.

The biocide typically constitutes 0.1-15 % by solids volume, e.g. 0.5-8 % by solids volume, in particular 1-6 % by solids volume, of the coating composition.

If one or more biocides are included, the ratio between on the one hand the combined amount of the hydrophilic oligomer/polymer moieties of the binder matrix (if present; see below) and the one or more hydrophilic-modified polysiloxane oil(s) and on the other hand the one or more biocides is typically in the range of 1:0.02 to 1:20, or 1:0.05 to 1:20, or 1:0.06 to 1:16, or 1:0.08 to 1:12, or 1:0.1 to 10, even 1:0.15 to 1:6, or 1:0.1 to 1:5, or 1:0.2 to 1:4. In other embodiments, the ratio between on the one hand the combined amount of the hydrophilic oligomer/polymer moieties of the binder matrix (if present; see below) and the one or more hydrophilic-modified polysiloxane oil(s) and on the other hand the one or more biocides is typically in the range of 1:0.02 to 1:20, or 1:0.05 to 1:20, or 1:0.06 to 1:16, or 1:0.08 to 1:14, or 1:0.1 to 12, even 1:0.15 to 1:10, or 1:0.05 to 1:9, or 1:0.1 to 1:8, or 1:0.2 to 1:7.

### Catalyst

The coating composition used for forming the cured fouling release coat may further comprise a condensation catalyst to accelerate the cross-linking. Examples of suitable catalysts include organometal- and metal salts of organic carboxylic acids, such as dibutyl tin dilaurate, dibutyl tin diacetate, dibutyl tin dioctoate, dibutyl tin 2-ethylhexanoate, dioctyl tin dilaurate, dioctyl tin diacetate, dioctyl tin dioctoate, dioctyl tin 2-ethylhexanoate, dioctyltin di neodecanoate, tin naphthenate, tin butyrate, tin oleate, tin caprylate, bismuth 2-ethylhexanoate, bismuth octanoate, bismuth neodecanoate, iron 2-ethylhexanoate, lead 2-ethyloctoate, cobalt-2-ethylhexanoate, manganese 2-ethylhexanoate, zinc 2-ethylhexanoate, zinc naphthenate, zinc stearate, cobalt naphthenate and titanium naphtenate; titanate- and zirconate esters such as tetrabutyl titanate, tetrakis(2-ethylhexyl)titanate, triethanolamine titanate, tetra(isopropenoxy)titanate, titanium tetrabutanolate, titanium tatrapropanolate; titanium tetraisopropanolate, zirconium tetrapropanolate, zirconium tetrabutanolate; chelated titanates such as diisopropyl bis(acetylacetonyl)titanate. Further catalysts include tertiary amines, such as triethylamine, tetrametylethylenediamine, pentamethyldiethylenetriamine and 1,4-ethylenepiperazine. Further examples include guanidine based catalysts. Even further examples of condensation catalysts are described in WO 2008/132196 and US 2004/006190.

The catalyst may be used alone or as combination of two or more catalysts. The amount of catalyst to be used is depending on the reactivity of the catalyst and the cross-linker(s) and desired drying time. In a preferred embodiment the catalyst concentration is between 0.01-10 %, e.g. 0.01-3.0 %, or 5.0-10 %, or 0.1-4.0 %, or 1.0-6.0 %, by weight of the total combined amount of the binder (i) and cross-linking agent (ii).

In some embodiments, a catalyst is not included.

### Solvents, additives, pigments and fillers

The coating composition used for forming the cured fouling release coat may further comprise solvents and additives.

Examples of solvents are aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof. Alternatively, the solvent system may include water or be water-based (>50% water in the solvent system).

In one embodiment, the solvents are selected from aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof, preferably those solvents having a boiling point of 110°C or more.

The solvents, if any, typically constitute 5-50 % by volume of the coating composition.

Examples of additives are:
(i) non-reactive fluids such as organopolysiloxanes; for example polydimethylsiloxane, methylphenyl polysiloxane; petroleum oils and combinations thereof;
(ii) surfactants such as derivatives of propylene oxide or ethylene oxide such as alkylphenol-ethylene oxide condensates (alkylphenol ethoxylates); ethoxylated monoethanolamides of unsaturated fatty acids such as ethoxylated monoethanolamides of linoleic acid; sodium dodecyl sulfate; and soya lecithin;
(iii) wetting agents and dispersants such as those described in M. Ash and I. Ash, "Handbook of Paint and Coating Raw Materials, Vol. 1", 1996, Gower Publ. Ltd., Great Britain, pp 821-823 and 849-851;
(iv) thickeners and anti-settling agents (e.g. thixotropic agents) such as colloidal silica, hydrated aluminium silicate (bentonite), aluminium tristearate, aluminium monostearate, xanthan gum, chrysotile, pyrogenic silica, hydrogenated castor oil, organo-modified clays, polyamide waxes and polyethylene waxes;
(v) dyes such as 1,4-bis(butylamino)anthraquinone and other anthraquinone derivatives; toluidine dyes, etc.; and
(vi) antioxidants such as bis(tert-butyl) hydroquinone, 2,6-bis(tert-butyl) phenol, resorcinol, 4-tert-butyl catechol, tris(2,4-di-tert-butylphenyl)phosphite, pentaerythritol Tetrakis(3-(3,5-di-tert-butyl-4-hydroxyphenyl)propionate), bis(2,2,6,6,-tetramethyl-4-piperidyl)sebacate, etc.

Any additives typically constitute 0-30 %, such as 0-15 %, by dry weight of the coating composition.

Preferably, the coating composition comprises one or more thickeners and/or anti-settling agents (e.g. thixotropic agents), preferably in an amount of 0.2-10 %, such as 0.5-5 %, e.g. 0.6-4 %, by dry weight of the coating composition.

Furthermore, the coating composition used for forming the cured fouling release coat may comprise pigments and fillers.

Pigments and fillers are in the present context viewed in conjunction as constituents that may be added to the coating composition with only limited implications on the adhesion properties. "Pigments" are normally characterised in that they render the final paint coating non-transparent and non-translucent, whereas "fillers" normally are characterised in that they do not render the paint non-translucent and therefore do not contribute significantly to hide any material below the coating.

Examples of pigments are grades of titanium dioxide, red iron oxide, zinc oxide, carbon black, graphite, yellow iron oxide, red molybdate, yellow molybdate, zinc sulfide, antimony oxide, sodium aluminium sulfosilicates, quinacridones, phthalocyanine blue, phthalocyanine green, black iron oxide, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow.

Examples of fillers are calcium carbonate such as calcite, dolomite, talc, mica, feldspar, barium sulfate, kaolin, nephelin, silica, perlite, magnesium oxide, and quartz flour, etc. Fillers (and pigments) may also be added in the form of nanotubes or fibres, thus, apart from the before-mentioned examples of fillers, the coating composition may also comprise fibres, e.g. those generally and specifically described in WO 00/77102 which is hereby incorporated by reference.

Any pigments and/or fillers typically constitute 0-60 %, such as 0-50 %, preferably 5-45 %, such as 5-40 %, or 5-35 %, or 0.5-25 %, or 1-20 %, by dry weight of the coating composition. Taking into account the density of any pigments and/or fillers, such constituents typically constitute 0.2-20 %, such as 0.5-15 % by solids volume of the coating composition

With the aim of facilitating easy application of the coating composition (e.g. by spray, brush or roller application techniques), the coating composition typically has a viscosity in the range of 25-25,000 mPa·s, such as in the range of 150-15,000 mPa·s, in particular in the range of 200-4,000 mPa·s.

### Preparation of the coating composition

The coating composition may be prepared by any suitable technique that is commonly used within the field of paint production. Thus, the various constituents may be mixed together utilizing a mixer, a high speed disperser, a ball mill, a pearl mill, a grinder, a three-roll mill etc. The coating compositions are typically prepared and shipped as two- or three-component systems that should be combined and thoroughly mixed immediately prior to use. The paints according to the invention may be filtrated using bag filters, patron filters, wire gap filters, wedge wire filters, metal edge filters, EGLM turnoclean filters (ex. Cuno), DELTA strain filters (ex. Cuno), and Jenag Strainer filters (ex. Jenag), or by vibration filtration. An example of a suitable preparation method is described in the Examples.

Preferably the enzymes are mixed with other paint constituents at a very late stage of the formulation process, such as after grinding and activation of thixotropic agents. Caution must be taken to keep temperatures relatively low, the lower the better, and - if at all necessary - only subject the formulation to elevated temperatures for as short time as possible. In one embodiment, the enzymes are added shortly before application.

The coating composition to be used in the method of the invention is typically prepared by mixing two or more components e.g. two pre-mixtures, one pre-mixture comprising the one or more reactive polysiloxane binders and one pre-mixture comprising the one or more cross-linking agents. It should be understood that when reference is made to the coating composition, it is the mixed coating composition ready to be applied. Furthermore, all amounts stated as % by dry weight of the coating composition should be understood as % by dry weight of the mixed paint composition ready to be applied, i.e. the weight apart from the solvents (if any).

Hence, the invention also provides a kit for preparing a fouling release coat as defined herein, said kit comprising a first container holding a polysiloxane binder base, and a second container holding a siloxane curing agent and optionally a catalyst, wherein the polysiloxane binder base of the first container is curable in the presence of the content of the second container. The catalyst and curing agent may be separated in two containers to obtain an extended storage stability. The kit further comprises one or more enzyme either as a constituent of the first container or a constituent of the second container, or alternatively in a third container.

When present in a third container, the one or more enzymes may be formulated together with additives necessary to obtain stability during storage, and miscibility with the content of the first and the second container.

### Specific embodiments of the paint coat

In one preferred embodiment the paint coat (preferably a top coat) comprises:
(i) 60-98 % by dry weight, or 70-93 % by dry weight, of the total paint coat composition of one or more reactive polydiorganosiloxanes (e.g. silanol-terminated polysiloxanes), one or more reactive polysiloxanes modified with hydrophilic oligomer/polymer moieties selected from poly(oxyalkylene)s and a cross-linker;
(ii) 0.00001-10 %, such as 0.002-5 %, by dry weight of the total paint coat composition of one or more enzymes, preferably selected from the group of hydrolytic enzymes.

In the above embodiment, the remainder of the paint coat (up to 100 % by dry weight) is preferably made up of one or more constituents selected from additives, catalysts, pigments, fillers, hydrophilic-modified polysiloxane oils (preferably those selected from the poly(oxyalkylene)-modified polysiloxane oils), and biocides.

In another preferred embodiment the paint coat comprises:
(i) 60-98 % by dry weight, or 70-93 % by dry weight of the total paint coat composition of one or more reactive polydiorganosiloxanes (e.g. silanol-terminated polysiloxanes) and a cross-linker;
(ii) 0.00001-10 % such as 0.002-5 %, by dry weight of the total paint coat composition of one or more enzymes, preferably selected from the group of hydrolytic enzymes.
(iii) 0.5-8 %, by dry weight of the total paint coat composition of one or more hydrophilic-modified polysiloxane oils selected from the poly(oxyalkylene)-modified polysiloxane oils,

In the above embodiment, the remainder of the paint coat (up to 100 % by dry weight) is preferably made up of one or more constituents selected from additives, catalysts, pigments, fillers, and biocides.

In yet another preferred embodiment the paint coat comprises:
(i) 60-98 % by dry weight, or 70-93 % by dry weight of the total paint coat composition of one or more reactive polysiloxanes (e.g. silanol-terminated polysiloxanes) and a cross-linker, where at least one reactive polysiloxane is modified with a hydrophilic oligomer/polymer moiety in one or several places along the siloxane chain;
(ii) 0.00001-10 % % by dry weight of the total paint coat composition of one or more enzymes, preferably selected from the group of hydrolytic enzymes.

In the above embodiment, the remainder of the paint coat (up to 100 % by dry weight) is preferably made up of one or more constituents selected from additives, catalysts, pigments, fillers, hydrophilic-modified polysiloxane oils (preferably those selected from the poly(oxyalkylene)-modified polysiloxane oils), and biocides.

Preferably, the paint coats according to the above embodiments include additives, pigments and fillers in the amounts specified further above.

The enzymes may have been modified or immobilised to improve the stability of the enzymes in the wet paint as well as in sea-water.

### Application of the coating composition

The coating composition of the invention is typically applied to at least a part of the surface of a substrate.

The term "applying" is used in its normal meaning within the paint industry. Thus, "applying" is conducted by means of any conventional means, e.g. by brush, by roller, by spraying, by dipping, etc. The commercially most interesting way of "applying" the coating composition is by spraying. Hence, the coating composition is preferably sprayable. Spraying is effected by means of conventional spraying equipment known to the person skilled in the art. The coating is typically applied in a dry film thickness of 50-600 µm, such as 50-500 µm, e.g. 75-400 µm, or 20-100 µm.

Moreover, the coating composition is preferably such with respect to sag resistance cf. ASTM D 4400-99 (i.e. relating to its ability to be applied in a suitable film thickness to a vertical surface without sagging) that it exhibits sag resistance for a wet film thickness up to at least 70 µm, such as up to at least 200 µm, preferably up to at least 400 µm, and in particular up to at least 600 µm.

The term "at least a part of the surface of a substrate" refers to the fact that the coating composition may be applied to any fraction of the surface. For many applications, the coating composition is at least applied to the part of the substrate (e.g. a vessel) where the surface (e.g. the ship's hull) may come in contact with water, e.g. sea-water.

The term "substrate" is intended to mean a solid material onto which the coating composition is applied. The substrate typically comprises a metal such as steel, iron, aluminium, or glass-fibre reinforced polyester. In the most interesting embodiments, the substrate is a metal substrate, in particular a steel substrate. In an alternative embodiment, the substrate is a glass-fibre reinforced polyester substrate. In some embodiments, the substrate is at least a part of the outermost surface of a marine structure.

The term "surface" is used in its normal sense, and refers to the exterior boundary of an object. Particular examples of such surfaces are the surface of marine structures, such as vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, water-power installations and structures, underwater oil well structures, nets and other aquatic culture installations, and buoys, etc.

The surface of the substrate may either be the "native" surface (e.g. the steel surface). However, the substrate is typically coated, e.g. with an anticorrosive coating and/or a tie coat, so that the surface of the substrate is constituted by such a coating. When present, the (anticorrosive and/or tie) coating is typically applied in a total dry film thickness of 100-600 µm, such as 150-450 µm, e.g. 200-400 µm. Alternatively, the substrate may carry a paint coat, e.g. a worn-out fouling release paint coat, or similar.

In one important embodiment, the substrate is a metal substrate (e.g. a steel substrate) coated with an anticorrosive coating such as an anticorrosive epoxy-based coating, e.g. cured epoxy-based coating, or a shop-primer, e.g. a zinc-rich shop-primer. In another relevant embodiment, the substrate is a glass-fiber reinforced polyester substrate coated with an epoxy primer coating.

This being said, the invention also relates to a method of coating a surface of a substrate, comprising the sequential steps of:
a) applying one or more layers of a primer composition and/or applying one or more layers of a tie-coat composition onto the surface of said substrate, and
b) applying one or more layers of a coating composition so as to obtain a fouling release coat as defined herein on the coated surface of said substrate.

It should be understood that the expression "fouling release" relates to all types of bio-fouling of a surface (i.e. settlement of organisms on a surface), in particular surfaces exposed to an aqueous environment or to aqueous liquids (e.g. within tanks, pipes, etc.). It is however, believed that the coatings defined herein are particularly relevant for avoiding or reducing marine bio-fouling, i.e. bio-fouling arising in connection with the exposure of a surface to a marine environment, in particular to seawater.

### A Marine Structure

The present invention also provides a marine structure comprising on at least a part of the outer surface thereof an outermost fouling release coat as defined hereinabove. In particular, at least as part of the outer surface carrying the outermost coating is a submerged part of said structure.

The coating composition, the method of establishing the coating on the substrate surface, and the characteristics of the coating follow the directions given hereinabove.

In one embodiment, the fouling release coating system of the marine structure may consist of an anticorrosive layer, a tie-coat and the fouling release coating as described herein.

In an alternative embodiment, the fouling release coating composition is applied on top of a used fouling release coating system, e.g. on top of a used polysiloxane-based fouling release coat.

In one particular embodiment of the above marine structure, the anticorrosive layer has a total dry film thickness of 100-600 µm, such as 150-450 µm, e.g. 200-400 µm; the tie-coat has a total dry film thickness of 50-500 µm, such as 50-400 µm, e.g. 75-350 µm or 75-300 µm or 75-250 µm; and the fouling release coating has a total dry film thickness of 20-500 µm, such as 20-400 µm, e.g. 50-300 µm.

A further embodiment of the marine structure is that where at least a part of the outermost surface of said structure is coated with a paint system comprising
a total dry film thickness of 150-400 µm of an anticorrosive layer of an epoxy-based coating established by application of 1-4, such as 2-4, layers;
a total dry film thickness of 20-400 µm of the tie-coat established by application of 1-2 layers; and
a total dry film thickness of 20-400 µm of the fouling release coating established by application of 1-2 layers.

In another embodiment of the above marine structure, the fouling release coating is applied directly on the anticorrosive layer without the use of tie-coat.

*Use for improving the antifouling properties of a polysiloxane based coating composition*

The invention further relates to the use of the combination of one or more polysiloxane components (e.g. those being modified with hydrophilic oligomer/polymer moieties, or in combination with one or more hydrophilic-modified polysiloxane oils) and one or more enzymes for improving the antifouling properties of a polysiloxane based coating composition. The combination is particularly relevant for improving the antifouling properties against slime and algae. In one variant, the coating composition also includes a biocide as described in detail further above.

It should be understood that the types of the polysiloxanes modified with hydrophilic oligomer/polymer moieties, the enzymes, and the types of suitable polysiloxane based binder systems are as defined further above, just at the amounts and relative proportions of the various ingredients are as defined further above.

### EXAMPLES

### Materials

RF-5000, ex. Shin-Etsu - Japan, silanol-terminated polydimethylsiloxane
Xylene from local supplier
DC550, ex. Dow Corning - USA, non-reactive methylphenyl polysiloxane oil
Silikat TES 40 WN, ex. Wacker Chemie - Germany, Ethyl silicate
Neostann U-12, ex. Nitto Kasai - Japan, Dibutyltin Dilaurate
Acetylaceton, ex. Wacker Chemie - Germany, 2,4-pentanedione
Xiameter ® PMX-200 Sil Fluid 1000cs, ex. Dow Corning - UK, Linear dimethylpolysiloxane oil
Xiameter ® PMX-200 Sil Fluid 5000cs, ex. Dow Corning - UK, Linear dimethylpolysiloxane oil
BYK331, ex. BYK - Germany, non-reactive polyether modified polydimethylsiloxane oil
Fomblin Y, ex. Solvay Solexis - Italy, perfluorinated polyether
Lumiflon LF-200, ex. Lumiflon - Japan, Fluorinated polymer
Fluorosil 2110, ex. Siltech Corporation - Canada, perfluoro nononyl ethyl PEG-8 dimethicone
Siltech C-1910, ex. Siltech Corporation - Canada, Fluorinated silicone polyetherBayferrox
130M, ex. Lanxess - Germany, Iron oxide
Aerosil R8200, ex. Evonik Industries - Germany, Hexamethyldisilazane treated fumed silica
Tego glide 435, ex. Evonik Industries - Germany, non-reactive polyether modified polydimethylsiloxane oil
Micronised wax Crayvallac super, ex. Cray Valley
Aerosil R972, ex. Evonik industries.
Demineralized water
Dynasylan VTMO, ex. Evonik Industries - Germany, vinyltrimethoxysilane
Platinum - divinyltetramethyldisiloxane complex in xylene - 2.1-2.4% platinum concentration, CAS No. 68478-92-2
Polydimethylsiloxane, hydride terminated - MWₙ =1100, eq. weight = 550 g/eq
Methylhydrosiloxane - dimethylsiloxane copolymer, hydride terminated - MWn = 2300, eq. weight = 200 g/eq
Polyethylene glycol di allyl ether - MWₙ = 300g/mol, Eq. weight =150 g/eq
Polyethylene glycol mono allyl ether (hydroxyl terminated) - MWₙ = 350 g/mol, eq. weight = 350 g/eq
Subtilisin A ®, ex. Sigma-aldrich (Cas: 9014-01-1)
Trypsin from bovine pancreas, ex. Sigma-aldrich (Cas: 9002-07-7)
Savinase 16L (type EX), ex. Novozymes
Esperase 8L, ex. Novozymes
Alcalase, ex. Novozymes
Papain, ex Sigma-aldrich (Cas: 9001-73-4)
Pronase E, ex. Sigma-aldrich (Cas: 9036-06-0)
Cellusoft L, ex. Novozymes
Endolase 5000L, ex. Novozymes
Beta-glucoronidase, ex. Sigma-aldrich (Cas: 9001-45-0)
Hemicellulase, ex. Sigma-aldrich (Cas: 9025-56-3)
Pectin methyl esterase, ex. Sigma-aldrich (Cas: 9032-75-1)
Acylase I, ex. Sigma-aldrich (Cas: 9012-37-7)
Savinase ® CLEA, ex. Clea technologies BV. Cross-linked enzyme agglomerates of Savinase (Activity: 500AGEU/g)
mPEG-NHS Ester, ex. Nanocs ®, PEG1-0001, Mw 5,000 Da.
Methoxypolyethyleneglycol maleimide, ex. Sigmaaldrich, Cas nr: 99126-64-4
Silane-PEG-NHS, ex. Nanocs®: Mw(PEG)= 5,000 Da

### viscosity

In the present application with claims, viscosity is measured at 25 °C in accordance with ISO 2555:1989.

### Pendant hydrophilic- modified polysiloxane (HMP1):

A pendant, curable poly(ethylene glycol) modified polysiloxane is prepared by mixing 25.0 g (polydimethylsiloxane-methylhydrosiloxane, hydride terminated) dissolved in 50.0 g water free toluene, with 0.013 g of a solution of platinum-divinyltetramethyldisiloxane complex in xylene in a three necked flask with reflux and a continuous flow of dry nitrogen gas to keep the reaction atmosphere moisture free. A magnetic stirrer is used in the reaction flask to keep the solution agitated during the synthesis. The solution is heated to 80°C. To this solution, 11.0 g of (vinyltrimethoxysilane) is added dropwise and allowed to react for 1 h at 80°C. After the completion of the reaction, 54.5 g polyethylene glycol mono allyl ether is added dropwise, and allowed to react for 4h at 80°C. The solvent was hereafter partially removed under reduced pressure using a rotary evaporator until the solvent content reached 10% to obtain the final product HMP1. The content of PEG-modified PDMS binder in HMP1 is 90 % w/w. The amount of PEG in the HMP1 binder is 60.2% w/w calculated on dry weight.

### Preparation of linear hydrophilic modified polysiloxane (HMP2):

A linear, curable poly(ethylene glycol) modified polysiloxane is prepared by mixing 5.00 g (polyethylene glycol diallyl ether) dissolved in 50.0 g water free toluene, with 0.013 g of a solution of platinum-divinyltetramethyldisiloxane complex in xylene in a three necked flask with reflux and a continuous flow of dry nitrogen gas to keep the reaction atmosphere moisture free. A magnetic stirrer is used in the reaction flask to keep the solution agitated during the synthesis. The solution is heated to 65°C. To this solution, 65.0 g polydimethylsiloxane (hydride terminated) is added dropwise, and allowed to react for 1 h at 80°C. After the completion of the reaction, 35.0 g of vinyltrimethoxysilane is added dropwise at 80°C and allowed to react for 1 h at 80°C. The solvent was hereafter partially removed under reduced pressure using a rotary evaporator until the solvent content reached 10% to obtain the final product HMP2. The content of PEG-modified PDMS binder in HMP2 is 90 % w/w. The amount of PEG in the HMP2 binder is 4.8% w/w calculated on dry weight.

### Preparation method for the model paints

Part (i) (silanol-terminated polydimethylsiloxane), xylene, (polydimethylsiloxane), silica, (polyamide wax), red iron oxide, (polyether modified polysiloxane), were mixed on a Diaf dissolver equipped with an impeller disc (70 mm in diameter) in a 1 L can for 15 minutes at 2000 rpm.

Part (ii) ethyl silicate, (xylene), catalyst, 2,4-pentanedione, (methylphenyl polysiloxane)) were mixed on a Diaf dissolver equipped with an impeller disc (70 mm in diameter) in a 1 L can for 2 minutes at 500 rpm.

Before the application, part (i) and part (ii) are mixed and enzymes are added in a solution/suspension in water the mix is then stirred to obtain homogeneity.

### Test Methods

### Blister Box Test

The Blister Box test is used to determine the influence of polysiloxanes modified with hydrophilic oligomer/polymer moieties on the stability of the PDMS coating to which they are added to.

### Preparation of panels

Steel panels (150x75x15 mm) are coated with 100 µm (dry film thickness, DFT) of a commercial epoxy primer (HEMPADUR Quattro 17634) applied by airless spraying. After 12 - 48 hrs of drying at room temperature a silicone tie coat (HEMPASIL Nexus 27302) is applied by doctor blade of 300 µm clearance. After 16-30 hrs of drying the top coat paint compositions are applied by doctor blade of 400 µm clearance. The panels are dried for 24 hrs before testing in the blister box.

### Testing

The panel surface with the coating system is exposed to 40 °C, saturated water vapour, at an angle of 15°/60° to the horizontal. The reverse side of the panel is exposed to room temperature. At the selected inspection intervals during and after completion of exposure, adhesion between tie coat/top coat and general condition of the top coat are evaluated.

Evaluation of adhesion between tie coat and top coat is based on the below ranking:
- Adhesion: Ranking Value
- FAIL/POOR: No adhesion/poor adhesion
- GOOD: Acceptable adhesion
Panels are exposed for two months and typically checked every week.

### Raft Test

### Preparation of panels

An acrylic panel (150x200 mm), sandblasted on one side to facilitate adhesion of the coating, is coated with 100 µm (DFT) of a commercial epoxy (HEMPEL Light Primer 45551) applied by air spraying. After 6 - 24 hrs of drying at room temperature a tie coat is applied by doctor blade of 300 µm clearance. After 16-30 hrs of drying the top coat paint compositions are applied by doctor blade of 400 µm clearance. The panels are dried for at least 72 hrs before immersion on the raft.

### Testing

Panels are tested at two different locations; Spain and Singapore.

### Test site in Spain

Located in Vilanova in north-eastern Spain. At this test site the panels are immersed into sea water with salinity in the range of 37-38 parts per thousand at an average temperature of 17-18 °C.

### Test site in Singapore

At this test site the panels are immersed into sea water with salinity in the range of 29-31 parts per thousand at a temperature in the range of 29-31 °C.

Panels are inspected ever 4-12 weeks and evaluated according to the following scale:

| **Level** | **Description** |
|---|---|
| Excellent | Only slime |
| Good | Algae + Animals < 10 % |
| Fair | 10 % < Algae + Animals < 25 % |
| Poor | Algae + Animals > 25 % |

### Bacterial biofilm retension

High through-put screening of fouling-release coatings can be performed at the Center for Nanoscale Science and Engineering at the North Dakota State University, USA.

Assays are performed on 24 wells micro plates, where 12 wells are coated with each experimental fouling release formulation. The coatings are pre-conditioned in deionised water until no toxicity of the water is observed. The coatings are then subjected to static suspensions of marine bacteria (*Celluphaga lytica*) or marine algae (*Navicula incerta*). The bacterial biofilms are stained and quantified spectroscopically, and the algae are quantified using fluorescence spectroscopy on chlorophyll extracts. The output of the measurements is directly proportional to the amount of biofilm on the coating. For the evaluation of the test-results, it is needed that a suitable commercial standard is included as reference in the test set-up, in the experiments reported here the commercial reference used was Intersleek 700 (ex. International paints). The tests were done including a commercial fouling release reference in the form of the Intersleek 700, a hydrophobic silicone-based fouling release coating.

### Barnacles settlement test

Ten three-days-old cypris larvae cultured from the adult *Balanus amphitrite* are added to two millilitres of a solution of the enzyme in artificial sea water (3.3% salinity and pH 8.0, 'Tropic Marin' from Aquarintechnik GmbH). 24 well polystyrene plates are used for the incubation, which is done in the dark at 28 °C. After 24 and 48 h, the settlement and mortality is evaluated by counting, cf. Pettitt et al., "Activity of Commercial Enzymes on Settlement and Adhesion of Cypris Larvae of the Barnacle Balanus amphitrite, Spores of the Green Alga Ulva linza, and the Diatom Navicula perminuta", Biofouling, Vol. 20, 2004, 299-311. For an enzyme to be effectively hindering barnacle settlement by degradation of its exopolymeric substances, the settlement level in the enzyme sample must be significantly lower (p ≤0.1) than the settlement level in a heat denatured control (i.e. a control containing the corresponding inactive enzyme obtained by heating a solution of the enzyme to 100 °C for five minutes) while mortality levels are similar. Since the concentration of enzyme is not necessarily directly proportional to the activity, a range of concentrations (typically up to 0.1 wt% pure enzyme) are tested to determine the capability of enzymes to degrade exopolymeric substances.

### Algae settlement test

15 millilitres of a suspension containing 3.10⁶ ml⁻¹ zoospores released from the green alga *Ulva linza* in artificial seawater (see above) is mixed with 15 millilitres of a solution of the enzyme in artificial seawater (see above). Ten millilitres of this dispersion is then transferred into three wells of a Quadriderm dish, containing an acid-washed glass microscope slide. Incubation occurs in the dark at room temperature (25 °C) for 60 minutes. After which motility is assessed by phototaxis, and spore density settlement is determined by visualisation using auto fluorescence of chlorophyll, cf. Pettitt et al. Activity of Commercial Enzymes on Settlement and Adhesion of Cypris Larvae of the Barnacle Balanus amphitrite, Spores of the Green Alga Ulva linza and the Diatom Navicula perminuta. Biofouling, Vol 20, 2004. For an enzyme to be effectively hindering algal settlement by degradation of its exopolymeric substances, the settlement level in the enzyme sample must be significantly lower (p ≤0.1) than the settlement level in a heat denatured control (see above) while motility must be similar. Since the concentration of enzyme is not necessarily directly proportional to the activity, a range of concentrations (typically up to 0.1 wt% pure enzyme) are tested to determine the capability of enzymes to degrade exopolymeric substances.

### Examples

The following model paints can be prepared for testing for antifouling performance.
All entries in model paints table are in weight unless otherwise stated. In the calculation of the final polysiloxane matrix, all the hydrolysable groups are presumed completely hydrolysed and reacted into a matrix through a condensation reaction with the polysiloxane binder. Therefore, the ethyl silicate contributes with 41 % of its weight to the calculations of the final polysiloxane matrix and vinyltrimethoxysilane contributes with 54 % of its weight correspondingly. When calculating the polysiloxane content of the binder matrix, the constituents included in the calculations as the starting materials, however with the above-mentioned corrections for ethyl silicate and vinyltrimethoxysilane.

### Example 1: Enzymes in a polysiloxane matrix.

| **Part (i)** | Wt % |
|---|---|
| Silanol-terminated polydimethylsiloxane (5000 cSt) | 67.7 |
| Xylene | 25.4 |
| Aerosil R972 | 1.16 |
| Micronised wax | 1.05 |
| Pigments | 4.65 |

| **Part (ii)** | Wt % |
|---|---|
| Ethyl silicate | 41.1 |
| Xylene | 31.7 |
| Dibutyltin dilaurate | 7.05 |
| 2,4-pentanedione | 20.1 |

| | **EC1A** | | PDMS-based commercial reference (Intersleek 700) | |
|---|---|---|---|---|
| | Wt% wet | Wt% dry | | |
| **Total part (i)** | 90.9 | 97.85 | | |
| **Total part (ii)** | 6.1 | 2.1 | | |
| Demineralized water | 3.0 | 0.00 | | |
| Papain | 0.05 | 0.07 | | |
| Weight % polysiloxane-based binder matrix in the dry cured coat | | 90.5 | | |
| Bacterial biofilm retention | 0.58 ± 0.11 | | 0.77 ± 0.06 | |
| Algal retention | 21,009± 832 | | 24,127± 861 | |

### Example 2 - Polysiloxane-based coatings with different enzymes

| **Part (i)** | Wt % |
|---|---|
| Silanol-terminated polydimethylsiloxane (5000 cSt) | 70.5 |
| Xylene | 21.2 |
| Hexamethyldisilazane treated fumed silica | 3.7 |
| Pigments | 4.6 |

| **Part (ii)** | Wt % |
|---|---|
| Ethyl silicate | 31.6 |
| Xylene | 49.3 |
| Dibutyltin dilaurate | 5.4 |
| 2,4-pentanedione | 13.6 |

| | EC1 | | EC2 | | EC3 | | EC4 | |
|---|---|---|---|---|---|---|---|---|
| | Wt% wet | Wt% dry | Wt% wet | Wt% dry | Wt% wet | Wt% dry | Wt% wet | Wt% dry |
| Part (i) | 80.64 | 94.92 | 81.46 | 94.94 | 86.72 | 94.68 | 86.72 | 94.68 |
| Part (ii) | 7.37 | 2.03 | 7.44 | 2.03 | 7.92 | 2.02 | 7.92 | 2.02 |
| Tego Glide 435 | 1.99 | 2.97 | 2.01 | 2.97 | 2.14 | 2.97 | 2.14 | 2.97 |
| Water | 9.96 | 0.00 | 9.05 | 0.00 | | | | |
| Subtilisin A | 0.05 | 0.07 | | | | | | |
| Trypsin | | | 0.04 | 0.06 | | | | |
| Savinase | | | | | 3.21 | 0.33 | | |
| Esperase 8L | | | | | | | 3.21 | 0.33 |
| Weight % polysiloxane-based binder matrix in the dry cured coat | | 86.5 | | 86.5 | | 86.3 | | 86.3 |
| Performance in Spain after 23 weeks | Excellent | | Excellent | | Excellent | | Excellent | |
| Performance in Singapore after 24 weeks | Good | | Excellent | | N/A* | | Excellent | |

| | | | | | | | | |
|---|---|---|---|---|---|---|---|---|
| * The panel had fallen off the raft within the first eight weeks of immersion. | | | | | | | | |

| | EC5 | | EC6 | | EC7 | | EC8 | |
|---|---|---|---|---|---|---|---|---|
| | Wt% wet | Wt% dry | Wt% wet | Wt% dry | Wt% wet | Wt% dry | Wt% wet | Wt% dry |
| Part (i) | 86.72 | 94.68 | 83.98 | 94.93 | 83.85 | 94.71 | 86.72 | 94.68 |
| Part (ii) | 7.92 | 2.02 | 7.67 | 2.03 | 7.66 | 2.02 | 7.92 | 2.02 |
| Tego Glide 435 | 2.14 | 2.97 | 2.07 | 2.97 | 2.07 | 2.97 | 2.14 | 2.97 |
| Water | | | 6.22 | 0.00 | 6.21 | 0.00 | | |
| Alcalase | 3.21 | 0.33 | | | | | | |
| Papain | | | 0.05 | 0.07 | | | | |
| Pronase | | | | | 0.21 | 0.30 | | |
| Cellusoft | | | | | | | 3.21 | 0.33 |
| Weight % polysiloxane-based binder matrix in the dry cured coat | 86.3 | 86.3 | | 86.5 | | 86.3 | | 86.3 |
| Performance in Spain after 23 weeks | Excellent | | Excellent | | Excellent | | Excellent | |
| Performance in Singapore after 24 weeks | Good | | Excellent | | Excellent | | Good | |

| | EC9 | | EC10 | | EC11 | |
|---|---|---|---|---|---|---|
| | Wt% wet | Wt% dry | Wt% wet | Wt% dry | Wt% wet | Wt% dry |
| Part (i) | 86.72 | 94.68 | 84.01 | 94.99 | 81.08 | 94.29 |
| Part (ii) | 7.92 | 2.02 | 7.68 | 2.03 | 7.41 | 2.01 |
| Tego Glide 435 | 2.14 | 2.97 | 2.07 | 2.97 | 2.00 | 2.95 |
| Water | | | 6.22 | 0.00 | 9.01 | 0.00 |
| Endolase | 3.21 | 0.33 | | | | |
| beta-glucoronidase | | | 0.01 | 0.01 | | |
| Hemicellulase | | | | | 0.50 | 0.74 |
| Weight % polysiloxane-based binder matrix in the dry cured coat | | 86.3 | | 86.6 | | 85.9 |
| Performance in Spain after 23 weeks | Excellent | | Excellent | | Excellent | |
| Performance in Singapore after 24 weeks | Excellent | | Excellent | | Good | |

| | EC12 | | EC13 | | EC14 (reference) | |
|---|---|---|---|---|---|---|
| | Wt% wet | Wt% dry | Wt% wet | Wt% dry | Wt% wet | Wt% dry |
| Part (i) | 83.45 | 94.07 | 75.99 | 94.70 | 89.60 | 95.00 |
| Part (ii) | 7.62 | 2.01 | 6.94 | 2.02 | 8.19 | 2.03 |
| Tego Glide 435 | 2.06 | 2.95 | 1.88 | 2.97 | 2.21 | 2.97 |
| Water | 6.18 | 0.00 | 15.01 | 0.00 | | |
| Pectin methyl esterase | 0.68 | 0.97 | | | | |
| Acylase I | | | 0.19 | 0.30 | | |
| Weight % polysiloxa ne- based binder matrix in the dry cured coat | | 85.7 | | 86.3 | | 86.6 |
| Performance in Spain after 23 weeks | Excellent | | Excellent | | Good | |
| Performance in Singapore after 24 weeks | Good | | Excellent | | Fair | |

### Example 3 - Polysiloxane-based coatings with an enzyme and silicone oils

| **Part (i)** | Wt % |
|---|---|
| Silanol-terminated polydimethylsiloxane (5000 cSt) | 67.7 |
| Xylene | 25.4 |
| Aerosil R972 | 1.16 |
| Micronised wax | 1.05 |
| Pigments | 4.65 |

| **Part (ii)** | Wt % |
|---|---|
| Ethyl silicate | 41.1 |
| Xylene | 31.7 |
| Dibutyltin dilaurate | 7.05 |
| 2,4-pentanedione | 20.1 |

| | EC15 | | EC16 | | EC17 | |
|---|---|---|---|---|---|---|
| | Wt% wet | Wt% dry | Wt% wet | Wt% dry | Wt% wet | Wt% dry |
| Part (i) | 90.15 | 97.86 | 88.17 | 94.87 | 88.17 | 94.92 |
| Part (ii) | 5.96 | 2.07 | 5.83 | 2.00 | 5.83 | 2.00 |
| Tego Glide 435 | | | 2.12 | 3.06 | | |
| DC550 | | | | | 2.08 | 3.00 |
| Water | 3.84 | 0.00 | 3.87 | 0.00 | 3.87 | 0.00 |
| Papain | 0.048 | 0.07 | 0.048 | 0.07 | 0.048 | 0.07 |
| Weight % polysiloxane-based binder matrix in the dry cured coat | | 90.5 | 90.5 | 87.7 | | 87.7 |
| Performance in Spain after 10 weeks | Poor | | Excellent | | Poor | |

| | EC18 | | EC19 | |
|---|---|---|---|---|
| | Wt% wet | Wt% dry | Wt% wet | Wt% dry |
| Part (i)^{.} | 88.17 | 94.91 | 88.13 | 94.87 |
| Part (ii) | 5.83 | 2.00 | 5.83 | 2.00 |
| Byk 331 | | | 2.12 | 3.06 |
| Xiameter PMX-200 Sil Fluid 1000cs | 0.4 | 0.58 | | |
| Xiameter PMX-200 Sil Fluid 5000cs | 1.68 | 2.42 | | |
| Water | 3.87 | 0.00 | 3.87 | 0.00 |
| Papain | 0.048 | 0.07 | 0.048 | 0.07 |
| Weight % polysiloxane-based binder matrix in the dry cured coat | | 87.7 | | 87.7 |
| Performance in Spain after 10 weeks | Poor | | Fair | |

### Example 4 - Adjusting enzyme amounts

| **Part (i)** | Wt % |
|---|---|
| Silanol-terminated polydimethylsiloxane (5000 cSt) | 67.7 |
| Xylene | 25.4 |
| Aerosil R972 | 1.16 |
| Micronised wax | 1.05 |
| Pigments | 4.65 |

| **Part (ii)** | % |
|---|---|
| Ethyl silicate | 41.1 |
| Xylene | 31.7 |
| Dibutyltin dilaurate | 7.05 |
| 2,4-pentanedione | 20.1 |

| | EC20 | | EC21 | | EC22 | |
|---|---|---|---|---|---|---|
| | Wt% wet | Wt% dry | Wt% wet | Wt% dry | Wt% wet | Wt% dry |
| Part (i) | 88.13 | 94.87 | 84.8 | 94.80 | 85.64 | 94.57 |
| Part (ii) | 5.83 | 2.00 | 5.61 | 2.00 | 5.67 | 2.00 |
| Byk 331 | 2.12 | 3.06 | 2.04 | 3.06 | 2.06 | 3.05 |
| Water | 3.87 | 0.00 | 7.453 | 0.00 | 3.76 | 0.00 |
| Papain | 0.048 | 0.07 | 0.093 | 0.14 | 0.047 | 0.07 |
| Endolase | | | | | 2.82 | 0.31 |
| Weight % polysiloxane-based binder matrix in the dry cured coat | | 87.7 | | 87.6 | | 87.4 |
| Performance in Spain after 10 weeks | Fair | | Good | | Good | |

### Example 5 - Effect of the amount of oil

| **Part (i)** | Wt % | | | | | |
|---|---|---|---|---|---|---|
| Silanol-terminated polydimethylsiloxane (5000 cSt) | 67.7 | | | | | |
| Xylene | 25.4 | | | | | |
| Aerosil R972 | 1.16 | | | | | |
| Micronised wax | 1.05 | | | | | |
| Pigments | 4.65 | | | | | |

| **Part (ii)** | Wt % | | | | | |
|---|---|---|---|---|---|---|
| Ethyl silicate | 41.1 | | | | | |
| Xylene | 31.7 | | | | | |
| Dibutyltin dilaurate | 7.05 | | | | | |
| 2,4-pentanedione | 20.1 | | | | | |

| | EC23 | | EC24 | | EC25 | |
|---|---|---|---|---|---|---|
| | Wt% wet | Wt% dry | Wt% wet | Wt% dry | Wt% wet | Wt% dry |
| Part (i) | 89.41 | 96.87 | 88.17 | 94.87 | 89.62 | 93.25 |
| Part (ii) | 5.91 | 2.04 | 5.83 | 2.00 | 5.75 | 1.91 |
| Tego Glide 435 | 0.7 | 1.02 | 2.12 | 3.06 | 3.42 | 4.77 |
| Water | 3.93 | 0.00 | 3.87 | 0.00 | 3.84 | 0.00 |
| Papain | 0.049 | 0.07 | 0.048 | 0.07 | 0.048 | 0.07 |
| Weight % polysiloxane-based binder matrix in the dry cured coat | | 89.5 | | 87.7 | | 86.2 |
| Performance in Spain after 10 weeks | Poor | | Excellent | | Excellent | |

| | EC26 | | EC27 | |
|---|---|---|---|---|
| | Wt% wet | Wt% dry | Wt% wet | Wt% dry |
| Part (i) | 89.93 | 94.96 | 84.84 | 94.86 |
| Part (ii) | 5.95 | 2.01 | 5.61 | 2.00 |
| Tego Glide 435 | 2.12 | 3.00 | 2.00 | 3.00 |
| Water | 1.98 | 0.00 | 7.46 | 0.00 |
| Papain | 0.025 | 0.04 | 0.093 | 0.14 |
| Weight % polysiloxane-based binder matrix in the dry cured coat | | 87.8 | | 87.7 |
| Performance in Spain after 10 weeks | Excellent | | Excellent | |

### Example 6 - Polysiloxane-based coatings with enzymes and hydrophilic-modified PDMS

| | EC28 (reference) | | EC29 | | EC30 (reference) | | EC31 | |
|---|---|---|---|---|---|---|---|---|
| | Wt% wet | Wt% dry | Wt% wet | Wt% dry | Wt% wet | Wt% dry | Wt% wet | Wt% dry |
| Silanol-terminated polydimethylsiloxane (5000 cSt) | 20.06 | 28.41 | 19.28 | 28.38 | 28.47 | 39.83 | 27.64 | 39.70 |
| Xylene | 18.28 | 0.00 | 17.57 | 0.00 | 18.28 | 0.00 | 17.74 | 0.00 |
| Micronised wax | 2.31 | 3.27 | 2.22 | 3.27 | 2.31 | 3.23 | 2.24 | 3.22 |
| Pigments | 4.31 | 6.10 | 4.14 | 6.09 | 4.31 | 6.03 | 4.18 | 6.01 |
| **Total part (i)** | 44.96 | 37.77 | 43.21 | 37.75 | 53.36 | 49.09 | 51.81 | 48.93 |
| Ethyl silicate | 2.42 | 1.40 | 2.32 | 1.40 | 2.42 | 1.38 | 2.35 | 1.38 |
| Xylene | 3.78 | 0.00 | 3.63 | 0.00 | 3.78 | 0.00 | 3.67 | 0.00 |
| Dibutyltin dilaurate | 0.42 | 0.59 | 0.40 | 0.59 | 0.42 | 0.59 | 0.41 | 0.59 |
| 2,4-pentanedione | 1.16 | 0.00 | 1.11 | 0.00 | 1.16 | 0.00 | 1.12 | 0.00 |
| Linear hydrophilic modified polysiloxane (HMP2) | 47.27 | 60.23 | 45.43 | 60.19 | 38.87 | 48.94 | 37.73 | 48.79 |
| **Total part (ii)** | 55.04 | 62.23 | 52.90 | 62.18 | 46.64 | 50.91 | 45.28 | 50.75 |
| Demineralized water | 0.00 | 0.00 | 3.85 | 0.00 | 0.00 | 0:00 | 0.00 | 0.00 |
| Papain | 0.00 | 0.00 | 0.05 | 0.07 | 0.00 | 0.00 | 0.00 | 0.00 |
| Endolase | 0.00 | 0.00 | 0.00 | 0.00 | 0.00 | 0.00 | 2.92 | 0.31 |
| Weight % polysiloxane-based binder matrix in the dry cured coat | | 89.5 | | 89.4 | | 89.6 | | 89.6 |
| Bacterial biofilm retention | 0.77 ± 0.15 | | 0.39 ± 0.06 | | 0.64 ± 0.03 | | 0.50 ± 0.06 | |

### Example 7 - Polysiloxane-based coatings with enzymes and hydrophilic-modified PDMS

| | EC32 (reference) | | EC33 | |
|---|---|---|---|---|
| | Wt% wet | Wt% dry | Wt% wet | Wt% dry |
| Silanol-terminated polydimethylsiloxane (5000 cSt) | 62.08 | 82.98 | 60.27 | 82.73 |
| Xylene | 18.28 | 0.00 | 17.74 | 0.00 |
| Micronised wax | 2.31 | 3.09 | 2.24 | 3.08 |
| Pigments | 4.31 | 5.76 | 4.18 | 5.74 |
| **Total part (i)** | 86.97 | 91.83 | 84.44 | 91.55 |
| Ethyl silicate | 2.42 | 1.29 | 2.35 | 1.29 |
| Xylene | 3.78 | 0.00 | 3.67 | 0.00 |
| Dibutyltin dilaurate | 0.42 | 0.56 | 0.41 | 0.56 |
| 2,4-penta nedione | 1.16 | 0.00 | 1.12 | 0.00 |
| Pendant hydrophilic modified polysiloxane (HMP1) | 5.25 | 6.32 | 5.10 | 6.30 |
| **Total part (ii)** | 13.03 | 8.17 | 12.65 | 8.15 |
| Endolase | | | 2.86 | 0.30 |
| Weight % polysiloxane-based binder matrix in the dry cured coat | | 90.1 | | 90.1 |
| Performance in Singapore after 8 weeks | Poor | | Fair | |

### Example 8: Cross-linking of enzymes (enzyme agglomerates)

| **Part (i)** | Wt % |
|---|---|
| Silanol-terminated polydimethylsiloxane (5000 cSt) | 67.7 |
| Xylene | 25.4 |
| Aerosil R972 | 1.16 |
| Micronised wax | 1.05 |
| Pigments | 4.65 |

| **Part (ii)** | Wt % |
|---|---|
| Ethyl silicate | 41.1 |
| Xylene | 31.7 |
| Dibutyltin dilaurate | 7.05 |
| 2,4-pentanedione | 20.1 |

| | EC34 | | EC35 | |
|---|---|---|---|---|
| | Wt% wet | Wt% dry | Wt% wet | Wt% dry |
| Part (i) | 91.4 | 94.5 | 80.5 | 94.5 |
| Part (ii) | 6.0 | 2.0 | 5.3 | 2.0 |
| Tego Glide 435 | 2.1 | 2.9 | 1.8 | 2.9 |
| Savinase | | | 8.8 | 0.70 |
| Savinase® CLEA | 0.50 | 0.70 | | |
| Weight % polysiloxane-based binder matrix in the dry cured coat | | 87.4 | | 87.4 |
| Performance in Spain after 8 weeks | Excellent | | Fair | |

### Example 9: Modification of enzyme-surfaces

Surface modification of enzymes was done to render the enzymes more stable in the paint matrix. The surfaces were modified using mono activated (NHS or maleimide) PEG, that reacts with the nucleophilic amino-acid said chain functionalities.

PEG-papain: 2 g of a solution of 0.787 wt% papain in PBS buffered water was mixed with 0.05 g mPEG-NHS Ester (ex. Nanocs) and left to react for 30 minutes at 25 °C on a stirring table.

PEG-Savinase: 0.2 g of Methoxypolyethyleneglycol maleimide was added to 10 g of the Savinase® solution and left to react for 30 minutes at 25 °C on a stirring table.

| **Part (i)** | Wt % |
|---|---|
| Silanol-terminated polydimethylsiloxane (5000 cSt) | 67.7 |
| Xylene | 25.4 |
| Aerosil R972 | 1.16 |
| Micronised wax | 1.05 |
| Pigments | 4.65 |

| **Part (ii)** | Wt % |
|---|---|
| Ethyl silicate | 41.1 |
| Xylene | 31.7 |
| Dibutyltin dilaurate | 7.05 |
| 2,4-pentanedione | 20.1 |

| | EC36 | | EC37 | | EC38 | | EC39 | |
|---|---|---|---|---|---|---|---|---|
| | Wt% wet | Wt% dry | Wt% wet | Wt% dry | Wt% wet | Wt% dry | Wt% wet | Wt% dry |
| Part (i) | 80.5 | 94.5 | 83.4 | 94.5 | 88.2 | 94.9 | 88.2 | 94.9 |
| Part (ii) | 5.3 | 2.0 | 5.5 | 2.0 | 5.83 | 2.0 | 5.83 | 2.0 |
| Tego Glide 435 | 1.8 | 2.9 | 1.9 | 2.9 | 2.1 | 3.0 | 2.1 | 3.0 |
| Savinase | 8.8 | 0.70 | | | | | | |
| PEG-Savinase | | | 9.2 | 0.70 | | | | |
| Papain | | | | | 0.048 | 0.070 | | |
| PEG-Papain | | | | | | | 2.05 | 0.066 |
| Water | | | | | 3.88 | | | |
| Weight % polysiloxane-based binder matrix in the dry cured coat | | 87.4 | | 87.4 | | 87.7 | | 87.7 |
| Performance in Spain after 8 weeks | Fair | | Good | | good | | Excellent | |

### Example 10: Immobilisation of enzymes in the binder matrix:

Enzymes were modifed with heterobifunctional PEG, that in one end reacts with the nucleophilic amino-acid group on the surface of the enzyme, and where the other end is silane functional, rendering the enzyme curable in the paint matrix:
Silane-PEG-papain:2 g of a solution of 0.787 wt% papain in PBS buffered water was mixed with 0.05 g Silane PEG NHS and allowed to react for 30 minutes at 25 °C.
Silane-PEG-Savinase: 0.1 g of Sil-PEG-NHS was added to 10 g of the savinase solution and allowed to react for 30 minutes at 25 °C.

| **Part (i)** | Wt % |
|---|---|
| Silanol-terminated polydimethylsiloxane (5000 cSt) | 67.7 |
| Xylene | 25.4 |
| Aerosil R972 | 1.16 |
| Micronised wax | 1.05 |
| Pigments | 4.65 |

| **Part (ii)** | Wt % |
|---|---|
| Ethyl silicate | 41.1 |
| Xylene | 31.7 |
| Dibutyltin dilaurate | 7.05 |
| 2,4-pentanedione | 20.1 |

| | EC40 | | EC41 | | EC42 | | EC43 | |
|---|---|---|---|---|---|---|---|---|
| | Wt% wet | Wt% dry | Wt% wet | Wt% dry | Wt% wet | Wt% dry | Wt% wet | Wt% dry |
| Part (i) | 80.5 | 94.5 | 83.4 | 94.5 | 88.2 | 94.9 | 88.2 | 94.9 |
| Part (ii) | 5.3 | 2.0 | 5.5 | 2.0 | 5.83 | 2.0 | 5.83 | 2.0 |
| Tego Glide 435 | 1.8 | 2.9 | 1.9 | 2.9 | 2.1 | 3.0 | 2.1 | 3.0 |
| Savinase | 8.8 | 0.70 | | | | | | |
| Silane PEG Savinase | | | 9.2 | 0.70 | | | | |
| Papain | | | | | 0.048 | 0.070 | | |
| Silane PEG Papain | | | | | | | 2.05 | 0.066 |
| Water | | | | | 3.88 | | | |
| Weight % polysiloxane-based binder matrix in the dry cured coat | | 87.4 | | 87.4 | | 87.7 | | 87.7 |
| Performance in Spain after 8 weeks | Fair | | Good | | good | | Excellent | |

### Example 11: Combining different enzymes:

| **Part (i)** | Wt % |
|---|---|
| Silanol-terminated polydimethylsiloxane (5000 cSt) | 67.7 |
| Xylene | 25.4 |
| Aerosil R972 | 1.16 |
| Micronised wax | 1.05 |
| Pigments | 4.65 |

| **Part (ii)** | Wt % |
|---|---|
| Ethyl silicate | 41.1 |
| Xylene | 31.7 |
| Dibutyltin dilaurate | 7.05 |
| 2,4-pentanedione | 20.1 |

| | EC44 | | EC45 | | | | | |
|---|---|---|---|---|---|---|---|---|
| | Wt% wet | Wt% dry | Wt% wet | Wt% dry | | | | |
| Part (i) | 85.7 | 94.7 | 89.1 | 94.8 | | | | |
| Part (ii) | 5.7 | 2.0 | 5.9 | 2.0 | | | | |
| Tego Glide 435 | 2.0 | 3.0 | 2.1 | 3.0 | | | | |
| Endolase 5000L | 2.8 | 0.21 | 2.9 | 0.21 | | | | |
| Papain | 0.047 | 0.070 | | | | | | |
| Hemicellulase | | | | | | | | |
| Acylase I | | | | | | | | |
| Water | 3.77 | | | | | | | |
| Weight % polysiloxane-based binder matrix in the dry cured coat | | 87.5 | | 87.6. | | | | |
| Performance in Spain after 16 weeks | Good | | Fair | | | | | |

### Example 12: Native vs. heat denatured enzymes:

| **Part (i)** | Wt % |
|---|---|
| Silanol-terminated polydimethylsiloxane (5000 cSt) | 67.7 |
| Xylene | 25.4 |
| Aerosil R972 | 1.16 |
| Micronised wax | 1.05 |
| Pigments | 4.65 |

| **Part (ii)** | Wt % |
|---|---|
| Ethyl silicate | 41.1 |
| Xylene | 31.7 |
| Dibutyltin dilaurate | 7.05 |
| 2,4-pentanedione | 20.1 |

Two panels were prepared with identical paints. One of them was immersed in boiling water for five minutes to inactivate the enzymes.

| | EC46 (Heat treated; reference) | | EC47 | |
|---|---|---|---|---|
| | Wt% wet | Wt% dry | Wt% wet | Wt% dry |
| Part (i) | 89.1 | 94.8 | 89.1 | 94.8 |
| Part (ii) | 5.9 | 2.0 | 5.9 | 2.0 |
| Tego Glide 435 | 2.1 | 3.0 | 2.1 | 3.0 |
| Endolase 5000L | 2.9 | 0.21 | 2.9 | 0.21 |
| Weight % polysiloxane-based binder matrix in the dry cured coat | | 87.6 | | 87.6 |
| Performance in Spain after 16 weeks | Poor | | Fair | |

### Example 13: Fluorinated oils and enzymes

| **Part (i)** | Wt % |
|---|---|
| Silanol-terminated polydimethylsiloxane (5000 cSt) | 67.7 |
| Xylene | 25.4 |
| Aerosil R972 | 1.16 |
| Micronised wax | 1.05 |
| Pigments | 4.65 |

| **Part (ii)** | Wt % |
|---|---|
| Ethyl silicate | 41.1 |
| Xylene | 31.7 |
| Dibutyltin dilaurate | 7.05 |
| 2,4-pentanedione | 20.1 |

| | EC48 | | EC49 | | EC50 | | EC51) | |
|---|---|---|---|---|---|---|---|---|
| | Wt% wet | Wt% dry | Wt% wet | Wt% dry | Wt% wet | Wt% dry | Wt% wet | Wt% dry |
| Part (i) | 88.2 | 94.9 | 91.8 | 95.0 | 88.2 | 95 | 91.8 | 95 |
| Part (ii) | 5.8 | 2.0 | 6.1 | 2.0 | 5.8 | 2.0 | 6.1 | 2.0 |
| Fluorosil 2110 | 2.1 | 3.0 | 2.1 | 3.0 | | | | |
| Fluorosil C-1910 | | | | | 2.1 | 3.0 | 2.2 | 3.0 |
| Papain | 0.048 | 0.070 | | | 0.048 | 0.070 | | |
| Water | 3.875 | | | | 3.874 | | | |
| Weight % polysiloxane-based binder matrix in the dry cured coat | | 87.7 | | 87.8 | | 87.8 | | 87.8 |
| Performance in Spain after 21 weeks | Good | | Fair | | Good | | Poor | |

## Claims

1. A cured fouling release coat comprising a polysiloxane-based binder matrix from a polysiloxane based binder which is a functional organopolysiloxane with terminal and/or pendant functionality, said polysiloxane-based binder matrix constituting 50-90 % by dry weight of the coat, and one or more enzymes.

2. The fouling release coat according to claim 1, wherein the one or more enzymes include hydrolytic enzymes, e.g. those selected from EC classes: EC 3.1, EC 3.2, EC 3.4, and EC 4.2; and/or wherein the one or more enzymes are selected from serine proteases, cysteine proteases, metalloproteinase, cellulase, hemicellulase, pectinase, and glycosidases; and/or wherein the one or more enzymes are selected from serine proteases, cysteine proteases, metalloproteinase, cellulase, hemicellulase, pectinase, and glycosidases; and/or wherein the one or more enzymes include an enzyme which is capable of degrading the exopolymeric substances of marine-based bio-fouling organisms as determined in the Barnacle settlement test described herein; and/or wherein the one or more enzymes include an enzyme which is capable of degrading the exopolymeric substances of marine-based bio-fouling organisms as determined in the Algae settlement test described herein.

3. The fouling release coat according to any one of the preceding claims, wherein the one or more enzymes are formulated.

4. The fouling release coat according to any one of the preceding claims, wherein the coat further comprises one or more hydrophilic-modified polysiloxane oils, and wherein the one or more hydrophilic-modified polysiloxane oils constitute 0.05-10 % by dry weight of the coating composition.

5. The fouling release coat according to any one of the preceding claims, wherein the binder matrix has included as a part thereof hydrophilic oligomer/polymer moieties wherein more than 50 % by weight of the binder matrix is represented by polysiloxane parts.

6. The fouling release coat according to any one of the preceding claims, which further comprises one or more thickeners and/or anti-settling agents (e.g. thixotropic agents); and/or which further comprises one or more solvents selected from aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof, preferably those solvents having a boiling point of 110 °C or more.

7. The fouling release coat according to any one of the preceding claims, wherein the coat further comprises one or more fluorinated oils.

8. The fouling release coat according to any one of the preceding claims, which is prepared from a coating composition having a viscosity in the range of 200-4,000 mPa·s measured at 25 °C in accordance with ISO 2555:1989; and/or which is prepared from a coating composition that it exhibits sag resistance for a wet film thickness up to at least 300 µm as determined in accordance with ASTM D 4400-99.

9. The fouling release coat according to any one of the preceding claims, which further comprises one or more biocides.

10. A kit for preparing a fouling release coat comprising one or more enzymes according to any one of the claims 1-9, said kit comprising a first container holding a polysiloxane binder base, and a second container holding a siloxane curing agent and optionally a catalyst, wherein polysiloxane binder base of the first container is curable in the presence of the content of the second container, the kit further comprises one or more enzyme either as a constituent of the first container or a constituent of the second container, or alternatively in a third container.

11. A method of coating a surface of a substrate, comprising the sequential steps of
a. applying one or more layers of a primer composition and/or applying one or more layers of a tie-coat composition onto the surface of said substrate, and
b. applying one or more layers of a coating composition so as to obtain a fouling release coat comprising one or more enzymes as defined in any one of claims 1-9 on the coated surface of said substrate.

12. A marine structure comprising on at least a part of the outer surface thereof an outermost fouling release coat as defined in any one of claims 1-9; preferably wherein at least as part of the outer surface carrying the outermost coating is a submerged part of said structure.

13. A fouling release coating composition comprising a polysiloxane-based binder system including a polysiloxane-based binder which is a functional organopolysiloxane with terminal and/or pendant functionality, said polysiloxane-based binder system constituting 50-90 % by dry weight of the coating composition, said binder system comprising one or more polysiloxane components modified with hydrophilic oligomer/polymer moieties, and one or more enzymes.

14. A fouling release coating composition comprising a polysiloxane-based binder system including a polysiloxane-based binder which is a functional organopolysiloxane with terminal and/or pendant functionality, said polysiloxane-based binder system constituting 50-90 % by dry weight of the coating composition, 0.01-20 % by dry weight of one or more hydrophilic-modified polysiloxane oils, and one or more enzymes.

15. A fouling release coating composition comprising (i) a polypolysiloxane-based binder system including a polysiloxane-based binder which is a functional organopolysiloxane with terminal and/or pendant functionality, said polysiloxane-based binder system constituting 50-90 % by dry weight of the coating composition, and one or more enzymes.

## Patentansprüche

1. Ausgehärteter Fouling freisetzender Überzug umfassend eine Bindemittelmatrix auf der Basis von Polysiloxan aus einem Bindemittel auf der Basis von Polysiloxan, das ein funktionelles Organopolysiloxan mit endständiger und/oder Seitenfunktionalität ist, wobei die Bindemittelmatrix auf der Basis von Polysiloxan 50 - 90 %, auf das Trockengewicht des Überzugs bezogen darstellt, und ein oder mehrere Enzyme.

2. Fouling freisetzender Überzug nach Anspruch 1, wobei das eine oder die mehreren Enzyme hydrolytische Enzyme umfasst/umfassen, z.B. diejenigen, die aus den EC-Klassen: EC 3.1, EC 3.2, EC 3.4 und EC 4.2 ausgewählt sind; und/oder wobei das eine oder die mehreren Enzyme ausgewählt sind unter Serinproteasen, Cysteinproteasen, Metalloproteinase, Cellulase, Hemicellulase, Pectinase und Glycosidasen; und/oder wobei das eine oder die mehreren Enzyme ausgewählt sind unter Serinproteasen, Cysteinproteasen, Metalloproteinase, Cellulase, Hemicellulase, Pectinase und Glycosidasen; und/oder wobei das eine oder die mehreren Enzyme ein Enzym umfasst/umfassen, das in der Lage ist, die exopolymeren Substanzen von Biofoulingorganismen auf Meeresbasis, wie im hier beschriebenen Rankenfüßerabsetztest bestimmt, abzubauen; und/oder wobei das eine oder die mehreren Enzyme ein Enzym umfasst/umfassen, das in der Lage ist, die exopolymeren Substanzen von Biofoulingorganismen auf Meeresbasis, wie im hier beschriebenen Algenabsetztest bestimmt, abzubauen.

3. Fouling freisetzender Überzug nach einem der vorhergehenden Ansprüche, wobei das eine oder die mehreren Enzyme formuliert wird/werden.

4. Fouling freisetzender Überzug nach einem der vorhergehenden Ansprüche, wobei der Überzug ferner ein oder mehrere hydrophil modifizierte Polysiloxanöle umfasst und wobei das eine oder die mehreren hydrophil modifizierten Polysiloxanöle 0,05 - 10 %, auf das Trockengewicht der Beschichtungszusammensetzung bezogen, darstellt/darstellen.

5. Fouling freisetzender Überzug nach einem der vorhergehenden Ansprüche, wobei in der Bindemittelmatrix als Teil davon hydrophile Oligomer-/Polymeranteile eingeschlossen sind, wobei mehr als 50 %, auf das Gewicht der Bindemittelmatrix bezogen, durch Polysiloxanteile dargestellt sind.

6. Fouling freisetzender Überzug nach einem der vorhergehenden Ansprüche, der ferner ein oder mehrere Verdickungsmittel und/oder Absetzverhinderungsmittel (z.B. thixotrope Mittel) umfasst; und/oder der ferner ein oder mehrere Lösungsmittel umfasst ausgewählt unter aliphatischen, cycloaliphatischen und aromatischen Kohlenwasserstoffen wie Testbenzin, Cyclohexan, Toluol, Xylol und Naphtha-Lösungsmitteln, Estern wie Methoxypropylacetat, n-Butylacetat und 2-Ethoxyethylacetat; Octamethyltrisiloxan und Mischungen davon, bevorzugt denjenigen Lösungsmitteln, die einen Siedepunkt von 110 °C oder mehr aufweisen.

7. Fouling freisetzender Überzug nach einem der vorhergehenden Ansprüche, wobei der Überzug ferner ein oder mehrere fluorierte Öle umfasst.

8. Fouling freisetzender Überzug nach einem der vorhergehenden Ansprüche, der aus einer Beschichtungszusammensetzung hergestellt wird, die eine Viskosität im Bereich von 200 - 4.000 mPa·s, bei 25 °C ISO 2555:1989 entsprechend gemessen, aufweist; und/oder der aus einer Beschichtungszusammensetzung hergestellt wird, die Durchsackresistenz bei einer Nassfilmdicke von bis zu mindestens 300 µm, wie ASTM D 4440-99 entsprechend bestimmt, aufweist.

9. Fouling freisetzender Überzug nach einem der vorhergehenden Ansprüche, der ferner ein oder mehrere Biozide umfasst.

10. Kit für die Herstellung eines Fouling freisetzenden Überzugs umfassend ein oder mehrere Enzyme nach einem der Ansprüche 1 - 9, wobei das Kit einen ersten Behälter, der einen Polysiloxan-Bindemittelgrundstoff hält, und einen zweiten Behälter umfasst, der ein Siloxanaushärtungsmittel und wahlweise einen Katalysator hält, wobei der Polysiloxan-Bindemittelgrundstoff des ersten Behälters in Gegenwart des Inhalts des zweiten Behälters aushärtbar ist, wobei das Kit ferner ein oder mehrere Enzyme entweder als Bestandteil des ersten Behälters oder als Bestandteil des zweiten Behälters oder alternativ in einem dritten Behälter umfasst.

11. Verfahren zum Beschichten einer Oberfläche eines Substrats, umfassend die aufeinanderfolgenden Schritte des
a. Auftragens einer oder mehrere Schichten einer Grundiermittelzusammensetzung und/oder Auftragens einer oder mehrerer Schichten einer Haftgrundierzusammensetzung auf die Oberfläche des Substrats und
b. Auftragens einer oder mehrerer Schichten einer Beschichtungszusammensetzung, um einen Fouling freisetzenden Überzug, der ein oder mehrere Enzyme, wie in irgendeinem der Ansprüche 1 - 9 definiert, umfasst, auf der beschichteten Oberfläche des Substrats zu erhalten.

12. Meeresbauwerk umfassend, auf mindestens einem Teil der Außenfläche davon, einen äußersten Fouling freisetzenden Überzug, wie in einem der Ansprüche 1-9 definiert; wobei bevorzugt mindestens als Teil der Außenfläche, die die äußerste Beschichtung trägt, ein unter Wasser liegender Teil des Bauwerks vorliegt.

13. Fouling freisetzende Beschichtungszusammensetzung umfassend ein Bindemittelsystem auf der Basis von Polysiloxan, das ein Bindemittel auf der Basis von Polysiloxan umfasst, das ein funktionelles Organopolysiloxan mit endständiger und/oder Seitenfunktionalität ist, wobei das Bindemittelsystem auf der Basis von Polysiloxan 50-90 %, auf das Trockengewicht der Beschichtungszusammensetzung bezogen darstellt, wobei das Bindemittelsystem ein oder mehrere Polysiloxankomponenten umfasst, die mit hydrophilen Oliogomer-/Polymeranteilen modifiziert sind, und ein oder mehrere Enzyme.

14. Fouling freisetzende Beschichtungszusammensetzung umfassend ein Bindemittelsystem auf der Basis von Polysiloxan, das Bindemittel auf der Basis von Polysiloxan umfasst, das ein funktionelles Organopolysiloxan mit endständiger und/oder Seitenfunktionalität ist, wobei das Bindemittelsystem auf der Basis von Polysiloxan 50 - 90 %, auf das Trockengewicht der Beschichtungszusammensetzung bezogen, 0,01 - 20 %, auf das Trockengewicht eines oder mehrerer hydrophil modifizierter Polysiloxanöle bezogen, und ein oder mehrere Enzyme umfasst.

15. Fouling freisetzende Beschichtungszusammensetzung umfassend (I) ein Bindemittelsystem auf der Basis von Polypolysiloxan, das ein Bindemittel auf der Basis von Polysiloxan umfasst, das ein funktionelles Organopolysiloxan mit endständiger und/oder Seitenfunktionalität ist, wobei das Bindemittelsystem auf der Basis von Polysiloxan 50 - 90 %, auf das Trockengewicht der Beschichtungszusammensetzung bezogen, darstellt, und ein oder mehrere Enzyme.

## Revendications

1. Revêtement antisalissure durci comprenant une matrice de liant à base de polysiloxane à partir d'un liant à base de polysiloxane qui est un organopolysiloxane fonctionnel possédant une fonctionnalité terminale et/ou pendante, ladite matrice de liant à base de polysiloxane constituant entre 50 et 90 % en poids sec du revêtement, et une ou plusieurs enzymes.

2. Revêtement antisalissure selon la revendication 1, dans lequel l'une ou plusieurs enzymes incluent des enzymes hydrolytiques, par exemple celles choisies parmi les classes EC : EC 3.1, EC 3.2, EC 3.4, et EC 4.2 ; et/ou dans lequel l'une ou plusieurs enzymes sont choisies parmi les sérine protéases, les cystéine protéases, la métalloprotéinase, la cellulase, l'hémicellulase, la pectinase, et les glucosidases ; et/ou dans lequel l'une ou plusieurs enzymes sont choisies parmi les sérine protéases, les cystéine protéases, la métalloprotéinase, la cellulase, l'hémicellulase, la pectinase et les glucosidases ; et/ou dans lequel une ou plusieurs enzymes incluent une enzyme qui est capable de dégrader les substances exopolymériques de salissures organiques marines comme déterminé dans l'essai de sédimentation pour anatifes décrit dans le présent document ; et/ou dans lequel une ou plusieurs enzymes incluent une enzyme qui est capable de dégrader les substances exopolymériques de salissures organiques marines comme déterminé dans l'essai de sédimentation pour algues décrit dans le présent document.

3. Revêtement antisalissure selon l'une quelconque des revendications précédentes, dans lequel l'une ou plusieurs enzymes sont formulées.

4. Revêtement antisalissure selon l'une quelconque des revendications précédentes, dans lequel le revêtement comprend en outre une ou plusieurs huiles de polysiloxane hydrophiles modifiées, et dans lequel l'une ou plusieurs huiles de polysiloxane hydrophiles modifiées constituent entre 0,05 et 10 % en poids sec de la composition de revêtement.

5. Revêtement antisalissure selon l'une quelconque des revendications précédentes, dans lequel la matrice de liant a inclus comme une partie d'elle-même des fragments oligomèriques/polymériques hydrophiles dans lesquels plus de 50 % en poids de la matrice de liant est représenté par les parties de polysiloxane.

6. Revêtement antisalissure selon l'une quelconque des revendications précédentes, qui comprend en outre un ou plusieurs épaississants et/ou agents de suspension (par exemple des agents thixotropiques) ; et/ou qui comprend en outre un ou plusieurs solvants choisis parmi des hydrocarbures aliphatiques, cycloaliphatiques et aromatiques tels que le white spirit, le cyclohexane, le toluène, le xylène et le solvant naphta, les esters tels que l'acétate de méthoxypropyle, l'acétate de n-butyle et l'acétate de 2-éthoxyéthyle ; le méthyltrisiloxane, et des mélanges de ceux-ci, de préférence les solvants possédant un point d'ébullition de 110 °C ou plus.

7. Revêtement antisalissure selon l'une quelconque des revendications précédentes, dans lequel le revêtement comprend en outre une ou plusieurs huiles fluorées.

8. Revêtement antisalissure selon l'une quelconque des revendications précédentes, qui est préparé à partir d'une composition de revêtement possédant une viscosité dans la gamme comprise entre 200 et 4 000 mPa.s mesurée à 25° C en accord avec ISO 2555:1989 ; et/ou qui est préparée à partir d'une composition de revêtement qui présente une résistance à la coulure pour une épaisseur de film humide jusqu'à au moins 300 µm déterminé selon ASTM 4400-99.

9. Revêtement antisalissure selon l'une quelconque des revendications précédentes, qui comprend en outre un ou plusieurs biocides.

10. Kit de préparation d'un revêtement antisalissure comprenant une ou plusieurs enzymes selon l'une quelconque des revendications 1 - 9, ledit kit comprenant un premier conteneur tenant une base de liant de polysiloxane, et un second conteneur tenant un agent durcisseur de polysiloxane et éventuellement un catalyseur, dans lequel la base de liant de polysiloxane du premier conteneur est durcissable en la présence du contenu du second conteneur, le kit comprend en outre une ou plusieurs enzymes soit en tant que constituant du premier conteneur soit en tant que constituant du second conteneur, ou alternativement dans un troisième conteneur.

11. Procédé de revêtement d'une surface d'un substrat, comprenant les étapes séquentielles consistant à
a. appliquer une ou plusieurs couches d'une composition d'amorçage et/ou appliquer une ou plusieurs couches une composition de couches d'accrochage sur la surface dudit substrat, et
b. appliquer une plusieurs couches d'une composition de revêtement de façon à obtenir un revêtement antisalissure comprenant une ou plusieurs enzymes comme défini selon l'une quelconque des revendications 1 - 9 sur la surface revêtue dudit substrat.

12. Structure marine comprenant au moins sur une partie de la surface extérieure de celle-ci un revêtement antisalissure le plus externe selon l'une quelconque des revendications 1 - 9 ; de préférence dans laquelle au moins une partie de la surface externe portant le revêtement le plus externe est une partie submergée de ladite structure.

13. Composition de revêtement antisalissure comprenant un système de liant à base de polysiloxane incluant un liant à base de polysiloxane qui est un organopolysiloxane fonctionnel possédant une fonctionnalité terminale et/ou pendante, ledit système de liant à base de polysiloxane constituant entre 50 et 90 % en poids sec de la composition de revêtement, ledit système de liant comprenant un ou plusieurs composants de polysiloxane modifiés avec des fragments oligomèriques/polymériques hydrophiles, et une ou plusieurs enzymes.

14. Composition de revêtement antisalissure comprenant un système de liant à base de polysiloxane incluant un liant à base de polysiloxane qui est un organopolysiloxane fonctionnel possédant une fonctionnalité terminale et/ou pendante, ledit système de liant à base de polysiloxane constituant entre 50 et 90 % en poids sec de la composition de revêtement, entre 0,01 et 20 % en poids sec de l'une ou plusieurs des huiles de polysiloxane hydrophiles modifiées, et une ou plusieurs enzymes.

15. Composition de revêtement antisalissure comprenant (i) un système de liant à base de polypolysiloxane incluant un liant à base de polysiloxane qui est un organopolysiloxane fonctionnel possédant une fonctionnalité terminale et/ou pendante, ledit système de liant à base de polysiloxane constituant entre 50 et 90 % en poids sec de la composition de revêtement, et une ou plusieurs enzymes.
